(19) Europäisches Patentamt

European Patent Office

Office européen des brevets

(11)  EP 1 910 863 B1

(12)  EUROPEAN PATENT SPECIFICATION

(45) Date of publication and mention
of the grant of the patent:
**26.03.2014  Bulletin 2014/13**

(21) Application number: **05763371.1**

(22) Date of filing: **14.07.2005**

(51) Int Cl.:
*G01S 13/72* (2006.01)       *G06F 17/18* (2006.01)

(86) International application number:
**PCT/IB2005/052341**

(87) International publication number:
**WO 2007/007138 (18.01.2007 Gazette 2007/03)**

(54) **MODEL SET ADAPTATION BY PROBABILITY MASS DIFFUSION**

MODELLSATZANPASSUNG DURCH WAHRSCHEINLICHKEITSMASSENDIFFUSION

ADAPTATION D'ENSEMBLE DE MODELES PAR DIFFUSION DE MASSE DE PROBABILITE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**16.04.2008  Bulletin 2008/16**

(73) Proprietor: **TELEFONAKTIEBOLAGET LM ERICSSON (publ)**
**164 83 Stockholm (SE)**

(72) Inventor: **KRONHAMN, Thomas**
**S-430 93 Hälsö (SE)**

(74) Representative: **Vejgaard, Christian**
**Ericsson AB**
**Patent Unit Antennas & Microwaves**
**417 56 Göteborg (SE)**

(56) References cited:
- **KRONHAMN T R: "Angle-only tracking of manoeuvring targets using adaptive-imm multiple range models" RADAR 2002 OCT. 15-17, 2002, PISCATAWAY, NJ, USA,IEEE, 15 October 2002 (2002-10-15), pages 310-314, XP010626884 ISBN: 0-85296-750-0**
- **XUEZHI WANG ET AL: "Minimal submodel-set algorithm for maneuvering target tracking" IEEE TRANSACTIONS ON AEROSPACE AND ELECTRONIC SYSTEMS IEEE USA, vol. 39, no. 4, October 2003 (2003-10), pages 1218-1231, XP002371459 ISSN: 0018-9251**

## Description

### Field of the invention

The present invention relates to prediction based on stochastic models, and more particularly to recursive methods, that is, prediction models repeatedly involving choosing among multiple statistical prediction models based on measurement data.

More specifically, the present application may be applied in a radar system predicting two-dimensional movements of objects as seen from a birds view perspective, whereby the radar system is measuring for instance the position of an object and is predicting future values of the position and the velocity of the object.

### Background of the invention

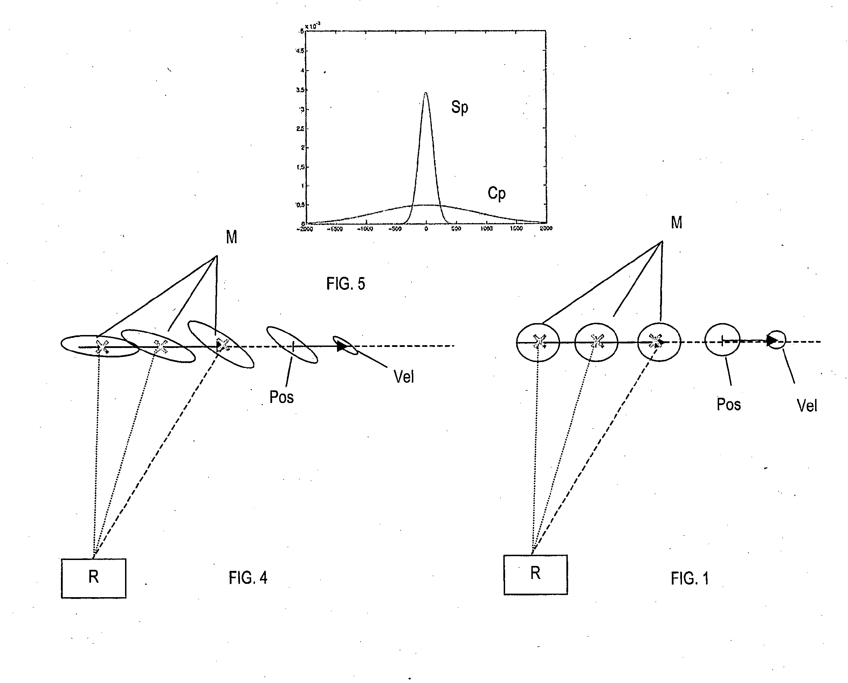

Fig. 1, is a birds view representation of a radar system R observing the position of a flying object. A number of observations are made by the radar system. As indicated in fig 1, the measured position M may be associated with a given measurement accuracy, which again may be approximated by a circular Gaussian probability density function (PDF), two examples of which have been illustrated in fig. 5. The radius of the circular area corresponds to the standard deviation of the Gauss distribution.

Having more measurements of the position at hand, a probability density function Pos of the position and a probability density function Vel for the estimated velocity of the object can be predicted, please c.f. fig. 1, whereby the estimated velocity vector is used as a basis for the forthcoming prediction of the position and velocity vector.

The present application is dealing with rendering such predictions more accurate and reliable as well as less computationally demanding.

In the following, a brief summary of the workings of the known prediction methods vis-à-vis the prediction method of the current invention will be made by referring to the exemplary scenario of a radar system observing a flying object. In such a system, the possible flight path is dependent on the capabilities of the airplane and the "behavior" of the pilot, as defined by his given task.

It should be understood, that the methods of the prior art, as well as the methods of the invention, are not limited to any particular application, such as to radar system applications. It should moreover be noted that in the context of prediction models, that the choice of measurement parameter is arbitrary. It should also be noted that prediction models could be based on a combination of sensed parameters. In the following description, focus has been put on a system only sensing the position of an object.

It should be noticed that a typical pulse-Doppler radar system is capable of sensing the radial position of an object with high accuracy. Therefore, the PDF may for a typical radar application more accurately be approximated by elliptical PDF's as indicated in fig. 4. However, as can be readily understood, predictions based on elliptical Gaussian probability functions are complex computational tasks. Elliptical distributions are widely used, but for illustrative simplicity circular PDF's are used in this document.

In the following figures, the measured position will be represented by an X and the measurement accuracy of the position will be approximated by a Gaussian circular PDF. It should be understood that in the following figures of the current document, whenever a PDF is referring to circular representation, the radius in question is proportional to the standard deviation of the PDF in question.

### Prediction Models - Model sets

Modeling non-linear and non-Gaussian dynamic systems by multiple models. (MM) is a common procedure in Bayesian estimation today, especially in high performance systems. In general, however, methods range from the single model Extended Kalman Filter to Particle filters, [see ref. 1]

Multiple dynamic models combined with a Markov mode switch model is a particularly useful approach when the real world system can be described as obeying the dynamics of some of the models for a period of time and then switch to another model.

Typical applications for this type of modeling are tracking of moving objects by sensor measurements, control of industrial processes, etc.

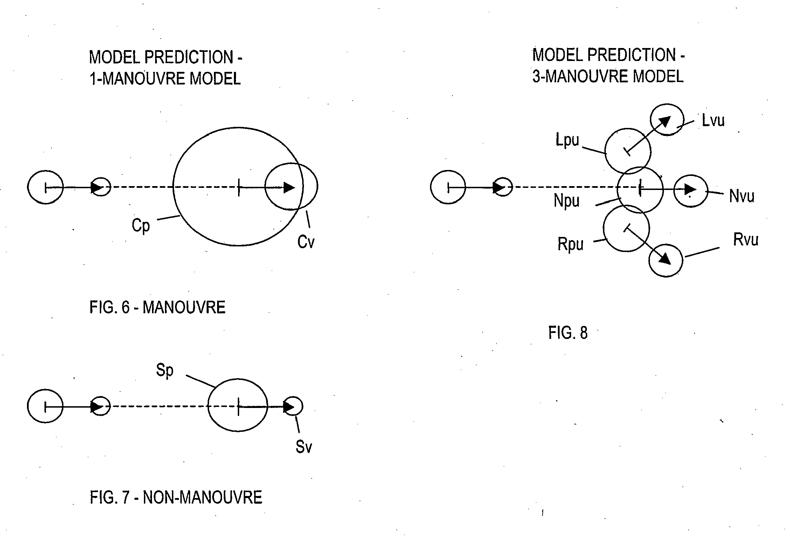

In fig. 6, a maneuver model based on a single Gaussian circular PDF is chosen so as to represent the behavior of a flying object, that is, for a given estimate of the current position and velocity of a flying object the predicted position Cp and the predicted velocity Cv are approximated. This model assumes that acceleration; deceleration, left turn and right turn maneuvers are equally possible, within a given prediction time.

In fig. 8, an alternative model for the flying object constructed from three Gaussian PDF's has been illustrated. It may be assumed that the straight-ahead option N is more likely than the left turn L and right turn R possibilities. Such a model may be closer to reality when describing the flight path of for instance a passenger traffic airplane. Suffix p and v corresponds to the position and velocity.

As an alternative to the maneuver model discussed above under fig. 6, a multi hypothesis modeling formed by fig. 6 and 7 in combination comprising an outer complementary (C) model enclosing an inner subset (S) model may be chosen.

The purpose of the totality of the complementary models (C-model) is to represent all possible future actions by the flying object. The likelihoods of the future predicted positions are, for example, given by the PDF, represented by the circle Cp of fig. 6. Hence, the purpose of the exclusive complementary model set is to cover an area of the two dimensional field by different models overlapping one another as little as possible.

A subset model (S-model) is a model that represents a subset of the system states as described by at least one C-model. The purpose of the S-model is to represent a temporally dominant system state(s). Often there is only one S-model. In fig. 5, the Gaussian PDF's of Sp and Cp have been illustrated. Each of the areas represented by the Sp and Cp amounts to 1, if they are looked upon as separate models. If they together are representing a non-Gaussian PDF, they are given weights (probabilities) so that the combined area amounts to 1. (The purpose of a S-model is to cover the same field by overlapping models)

In the present context of a radar system observing the two-dimensional flight path of a flying object, the complementary model of fig. 6 represents a maneuver model, while the sub-set model of fig. 7 represents a non-maneuver model.

For airplane applications, the fig. 6 and 7 models may be weighted with probabilities 0.7 for the S-model and 0.3 (not shown) for the C-model. This joint distribution would describe a pattern in which a non-maneuver is more likely than a maneuver, which would be the case for most airplane traffic behavior. It is noted, that probabilities depend both on à priori assumptions and on how accurate the modeling fits with the behavior as given by the measurements. This may be calculated by the well known prior art of Bayes' rule.

Recursive modeling

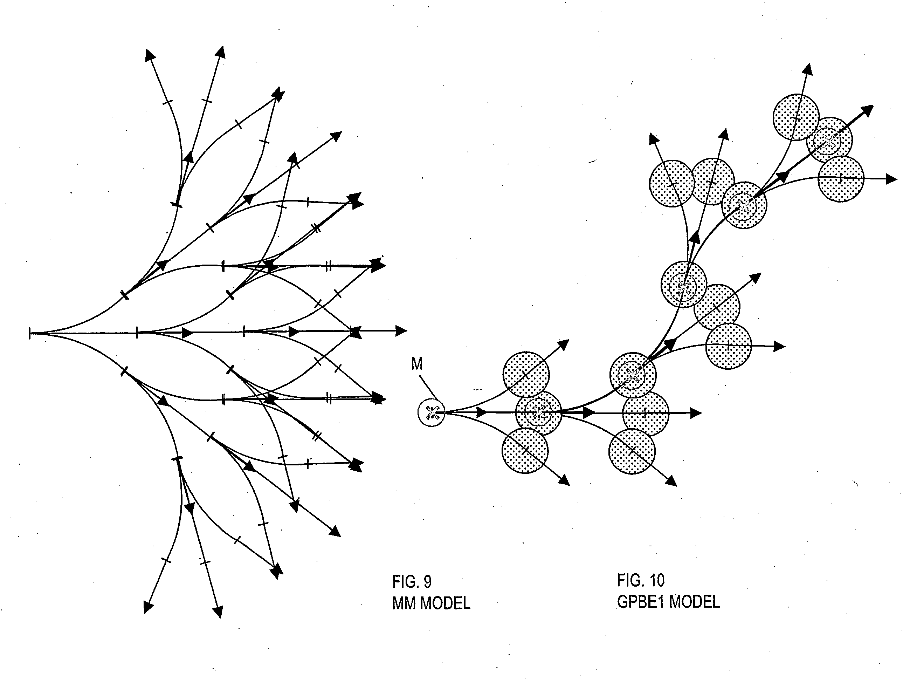

Let us return to the prediction model based on three Gaussian PDF's, c.f. fig. 8, which have a total probability of 1. Such a model has been implemented over consecutive measurement occasions depicted in fig. 9, whereby each Gaussian PDF, left, right and straight ahead, by way of example, may be considered equally likely.

A recursive method involves that the actual position and velocity in two-dimensional space of the forthcoming PDF is repeatedly determined by the last position of the measured object. Consequently, the exemplary paths of fig. 9 can depict consecutive predictions.

When the measurement accuracy is good in relation to the prediction model, the Gaussian PDF, which fits best on the recent measurement, is chosen as a starting point for the next prediction.

However, say a measurement falls in a left turn prediction model; the recent measurement may not necessarily correspond with reality. That is, from an á-posteriori point of view, the assumption that the object actually took a left turn may be rejected or confirmed or evaluated as to its likelihood by still later measurements. This evaluation may be further evaluated by still later measurement periods.

For this reason, an optimal recursive modeling may take into account all previous maneuver possibilities. Such a recursive modeling may be particular appropriate, if measurements are not provided at every measurement instance or if measurements are ambiguous due to the detection of other phenomena.

The idea of the known optimal MM (multiple model) tracking method is to represent all possible mode combinations from the start up to the present time and to calculate the probability of each such combination by Bayes' rule. This leads to an exponentially increasing number of filters (one for each combination), as described by the "structure", [ref. 2]

$$(N_e, N_f) = (N_m^{k-1}, N_m^k),$$

where k is the number of measurement occasions, $N_m$ is the number of models, $N_e$ is the number of estimates at the beginning of each cycle and $N_f$ is the number of filters in the algorithm.

It is readily understood, that it will become computational burdensome to make evaluations based on more model update periods by taking all possibilities into account. Moreover, some possibilities will appear highly unlikely as measurements are performed. Therefore, branches relating to older highly unlikely branches may be abandoned from consideration - or pruned in order to keep the number of filters within the limits of computational possibilities. This means that combinations with low probabilities are deleted (pruned) and combinations with almost equal state estimates are combined (merged). This kind of control has little influence on the joint PDF (probability density function) if the probability threshold is low (and the probabilities are re-normalized) and the merge method at least preserves the first and second moments. In this way, however, there is no firm control of the number of filters.

An effort to systemize the MHT concept, with a firm control of the number of filters, is the Generalized Pseudo Bayesian Estimators of order n (GPBEn) [see ref. 2]. These keep mode combinations n time steps (measurement cycles) back. They have a structure of

$$(N_e, N_f) = (N_m^{n-1}, N_m^n).$$

The number of filters is fixed.

The corresponding limitation on filters has been illustrated in fig. 10 for n=1, i.e. GPBE1.

The Interacting Multiple Model (IMM) algorithm has been considered, for many applications, as constituting the best compromise between performance and computational requirements. The reason is that the IMM model interaction technique reduces the computational structure to

$$(N_e, N_f) = (N_m, N_m)$$

In IMM, the models are "interacting" at each time step before the prediction phase. This is reducing the number of prediction filters to the same number as the number of models. The interaction can be seen as a merge process governed by the Markov mode switch model.

In general, the recursive, non-linear and non-Gaussian estimation problem is a matter of representing a non-Gaussian and non-stationary probability density function. The Multiple Model (MM) approach, of different versions, is doing this as a sum of Gaussian PDF's weighted according to their probabilities. After each measurement, most methods - except the true optimal MM - have to re-arrange (adapt) the models to better represent the PDF during the prediction phase. This is because a limited number of filters shall replace the optimal, exponentially increasing number of filters.

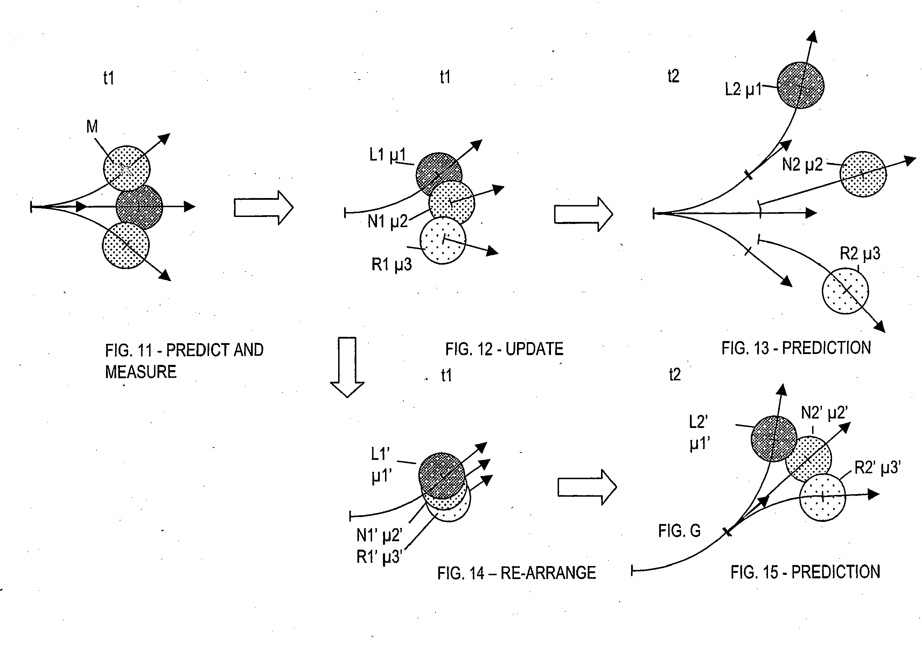

We shall now look at the measurement, update, re-arrangement and prediction stages of a sub-optimal MM-method such as the IMM model, as exemplified by figs. 11,12, 14 and 15, which is based on the maneuver model of fig. 8. In this exemplary scenario, the measurement M is assumed to fall in the centre of the left turn model.

In fig. 11, after the measurement is completed at time t1, the probability assessment for the maneuver at time t1 may be re-evaluated such that the PDF model or models for which the measurement likely occurred are considered more likely than assumed a priori. Such a re-evaluation or update has been indicated in fig. 12, where the left turn is assigned the highest probability, $\mu 1$, the straight a head option a lower possibility $\mu 2$ and the right turn is assigned a still lower possibility $\mu 3$, whereby the sum of all possibilities remains 1. Moreover, according to the update step, each respective model is displaced in two-dimensional space in dependency of the measurement outcome. In the present example the left turn model L1 is not displaced, as the measurement happened to be in the centre of the left turn model. However, N1 and R1 are displaced in proportionality with the difference between the measurement and the previous respective prediction model. A darker hatching of the PDF corresponds to a higher probability (this also applies to figs. 11 - 15 and 22 - 37).

Fig. 14, which follows the steps shown in fig. 11 and fig. 12 (of time t1), relates to the re-arrangement according to suboptimal MM-methods, such as the IMM method and the proposed method. We shall now explain the mechanisms by studying, what would happen if further predictions were made under the condition that no more than one model may be used for prediction, per already used model in the update phase (and not three models as shown previously, fig. 9), in order to keep down the computational complexity, and if no re-arrangement process is applied. Such a scenario has been indicated in fig. 13, where models L2, M2 and R2 to time t2 are predicted having likelihoods corresponding to the updated predictions at time t1 for L1, 12 and L3. It is seen that the predictions for time t2, may spread in all directions.

The IMM method avoids the above situation by re-arranging the already used models for time t1, after the measurement, by displacing the centers of the Gaussian PDF's in two-dimensional space as indicated from fig. 12 and fig. 14. All models are displaced according to an influence from the other individual models for the same time instance, whereby the model having the greatest likelihood influences movement of a less likely model a given amount and influences the movement of the least likely model the most. This effect has been visualized in fig. 14 showing the displacements of L1 to L1', M1 - M1' and R1 - R1'. Moreover, the probabilities (not shown) of the respective models are changed.

The result of the update, fig. 12, and rearrangement, fig. 14, has been shown in fig. 15, where the placements of the models are more narrowly centered around the recent measurement direction.

In the above explanation, reference was made to a situation where, the measurement clearly fell within the standard deviation of one of the Gaussian models. This may of course not always be the case, as shall be discussed in more detail later.

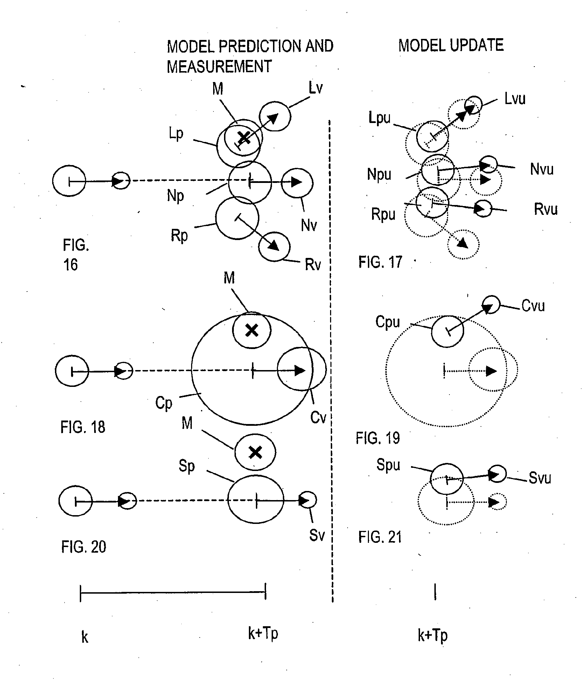

Further details relating to the processes of starting from time k, predicting to and measuring at time k + Tp and updating the models for time k + Tp for respectively the three maneuver model of fig. 8 have been shown in figs 16 and 17. The process for updating the model for the combined complementary / subset-model and of figs. 6 and 7 has been shown in more detail in figs 18 - 21. In figs. 16 - 21 the indices are p - position, v - velocity; M - measurement, L - left; N - straight on; R - right; C - complementary, S - subset; u - update.

In fig 17, the relative position of PDF Lp has been indicated together with Lpu in order to demonstrate the model update. The same applies for figs 19 and 21, respectively with regard to figs 18 and 20, respectively.

General model - state vector

In the foregoing, focus has been on a two-dimensional radar application. However, as mentioned above, the method according to the invention is also applicable to other systems. Therefore, the method shall be described with regard to a general state vector, which description is well known in the art.

The dynamic system is described at the time instant k by the state vector x(k).

A moving object may have the state vector elements

$$x(k) = \begin{bmatrix} x \\ y \\ \dot{x} \\ \dot{y} \end{bmatrix} \qquad (1)$$

in a horizontal, 2-dimensional Cartesian coordinate frame.

The state of the dynamic system may be estimated by measurements obtained from a sensor (e.g. radar).

The estimated state vector may have the same form as above, or $\hat{x}(k|k)$, where the "hat" separates the estimate from the true value, the first time suffix shows the time of the estimate and the second time suffix shows the last measurement used. In this way, $\hat{x}(k + 1|k)$ is an estimate of the state vector at time k+1, where measurements up to and including time k have been used. This last expression is also called the (one step) predicted value from time k. For simplicity the hat may be omitted in many cases.

State vector estimates may also be described by an uncertainty measure, describing the accuracy of the estimate. In the usual case of Gaussian uncertainties (probability density functions) they are completely described by the covariance matrix P. For the state estimate above the covariance matrix is

$$P(k|k) = \begin{bmatrix} p_{xx} & p_{xy} & p_{x\dot{x}} & p_{x\dot{y}} \\ p_{yx} & p_{yy} & p_{y\dot{x}} & p_{y\dot{y}} \\ p_{\dot{x}x} & p_{\dot{x}y} & p_{\dot{x}\dot{x}} & p_{\dot{x}\dot{y}} \\ p_{\dot{y}x} & p_{\dot{y}y} & p_{\dot{y}\dot{x}} & p_{\dot{y}\dot{y}} \end{bmatrix} \qquad (2)$$

where the diagonal elements are the variances in the respective coordinate, i.e.

$$p_{ii} = \sigma_{ii}^2, \qquad (3)$$

where *i* is the row and column number, and the off-diagonal elements are the covariances of the respective state elements of that row and column, respectively, i.e.

$$p_{ij} = \rho_{ij}\sigma_i\sigma_j, \qquad\qquad (4)$$

where $\rho$ is the correlation coefficient, $\sigma$ the standard deviation and $i$ and $j$ are the row and column numbers, respectively.

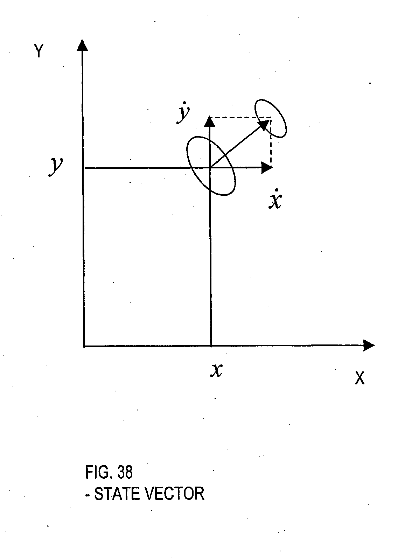

The upper left 2x2 matrix, of $P(k|k)$, represents the 2-dimensional position uncertainty and can be visualized as an ellipse in the xy-plane, centered at the position estimate. In the same way, the lower right 2x2 matrix is the 2-dimensional velocity uncertainty. This may be visualized as an ellipse "on top of the velocity vector". This has been illustrated in fig. 38.

Block diagram of recursive filter

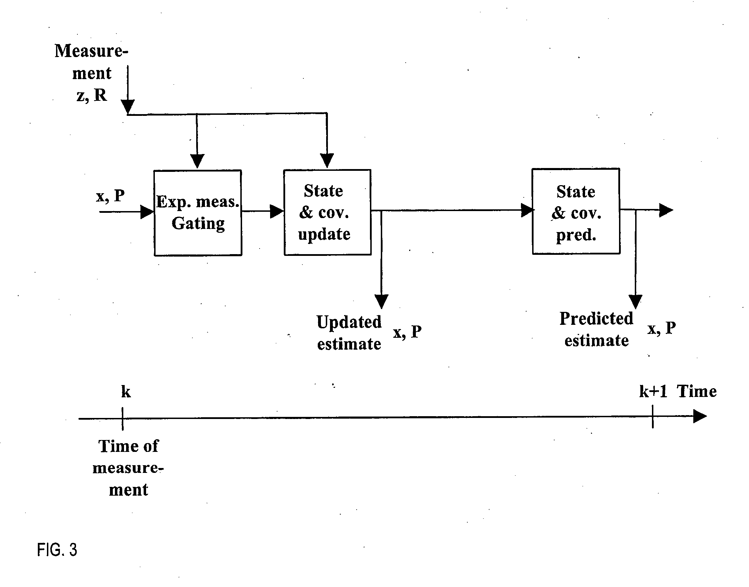

Fig. 3 shows a block diagram of a general, recursive filter. The figure shows the signal flow and the functional blocks for one cycle of calculations. The cycle duration may be any time T, constant or changing.
In fig. 3, the measurement and state vectors are denoted z and x, with co-variance matrices R and P, respectively. The filter comprises two mandatory blocks, state and covariance update block "State & cov. update", (7) and (8) - referring to equations given in the following - and state and covariance prediction block, "State & cov. pred.", (13), and an optional block expected measurement and gating block, "Exp. Meas., Gating". The latter block is in some applications used for fencing off unwanted measurements. It calculates the expected value of the measurement, (6), and an area/volume within which the actual measurement should fall.
The basic function of the recursive filter is as follows: At time time index k, a measurement z(k), R(k) (5) occurs. A previously predicted estimate, i.e. predicted before time index k for time index k, denoted x(k|k-1), P(k|k-1) is provided to the expected measurement and gating block together with the corresponding measurement for time index k, z(k), R(k). The result is provided to the state and covariance update block to which a further input of the measurement z(k), R(k) is made. An updated estimate for x(k|k), P(k|k) (7) is provided. Finally, the updated result is processed in the state and covariance prediction block, for predicting the state variable and covariance for x(k|k+1), P(k|k+1) (13) for the successive time index. The process is iterated with the result and measurement for the next time index.

The IMM algorithms

UPDATE:

Given a measurement (vector) z(k), at time k, which relates to the true state vector x(k) as given by the (linear) equation

$$z(k) = Hx(k) + v(k) \qquad\qquad (5)$$

where $H$ is the so-called measurement matrix,
$v$ is the measurement noise.

The accuracy of the measurement is in this formulation described by the measurement noise covariance matrix $R$.
The expected measurement is the part of the predicted state vector that is measured, e.g. the position in this case,

$$z(k|k-1) = Hx(k|k-1) \qquad\qquad (6)$$

The update equations, for a model $i$, may be written as

$$x_i(k|k) = x_i(k|k-1) + K_i(k)(z(k) - H_i x_i(k|k-1))$$
$$P_i(k|k) = (I - K_i(k)H_i)P_i(k|k-1)(I - K_i(k)H_i)' + K_i(k)RK_i(k)' \qquad\qquad (7)$$

The update gain matrix $K_i$ may be calculated as the Kalman gain

$$K_i(k) = P_i(k|k-1)H_i'\left[H_iP_i(k|k-1)H_i' + R\right]^{-1} \qquad (8)$$

The prediction and update equations given above constitute the well-known Kalman filter equations. (Especially the covariance update equation above can be written in a number of different, but equivalent, forms).

In non-linear applications, e.g. with the left and right turn models, these equations may be slightly modified from the original Kalman filter equations for linear models, to the equally well known form of the so called Extended Kalman filter equations.

The update of the model probabilities follows the well-known Bayes' rule

$$\mu_i(k|k) = li(z(k)|i)\mu_i(k|k-1)/\sum_i li(z(k|i)\mu_i(k|k-1) \qquad (9)$$

where $li(z(k|i)$ means the likelihood of the measurement $z$ given the model $i$.

PROBABILITY PREDICTION

The probability prediction may be written as

$$\mu(k+1|k) = M_p\mu(k|k) \qquad (10)$$

where $M_p$ is the probability prediction matrix, in most cases based on a Markov mode switch model.

MODEL INTERACTION

The model data interaction is governed by the probability prediction.
For each model $i$:

$$x_i^I(k) = \sum_j^N m_{ij}\mu_j(k|k)x_j(k|k)/\mu_i(k+1|k)$$

$$P_i^I(k) = \sum_j^N m_{ij}\mu_j(k|k)(\Delta x_{ij}\Delta x_{ij}' + P_j(k|k))/\mu_i(k+1|k) \qquad (11)$$

where

$$\Delta x_{ij} = x_j(k|k) - x_i^I(k) \qquad (12)$$

and $N$ is the number of models and $m_{ij}$ are the elements of the probability prediction matrix $M_p$.

MODEL DATA PREDICTION

The standard, time discrete, state vector prediction, for a linear model, from time instant $k$ to time instant $k+1$ may be written as

$$x_i(k+1|k) = \Phi_i x_i(k|k)$$
$$P_i(k+1|k) = \Phi_i P_i(k|k)\Phi_i' + Q_i \qquad (13)$$

where

i is the model number
$\Phi$ is the deterministic prediction model, e.g. straight line prediction,
$\Phi'$ is the transpose of $\Phi$,
Q is the stochastic prediction model, often called the process noise co-variance matrix, used to model object maneuvers. For a model of a non-maneuvering object, this is a null-matrix.

For a non-linear model, such as left or right turn models, these equations take slightly different forms. This is well known from the theory of the so-called Extended Kalman filter.

Block diagram of the IMM filter

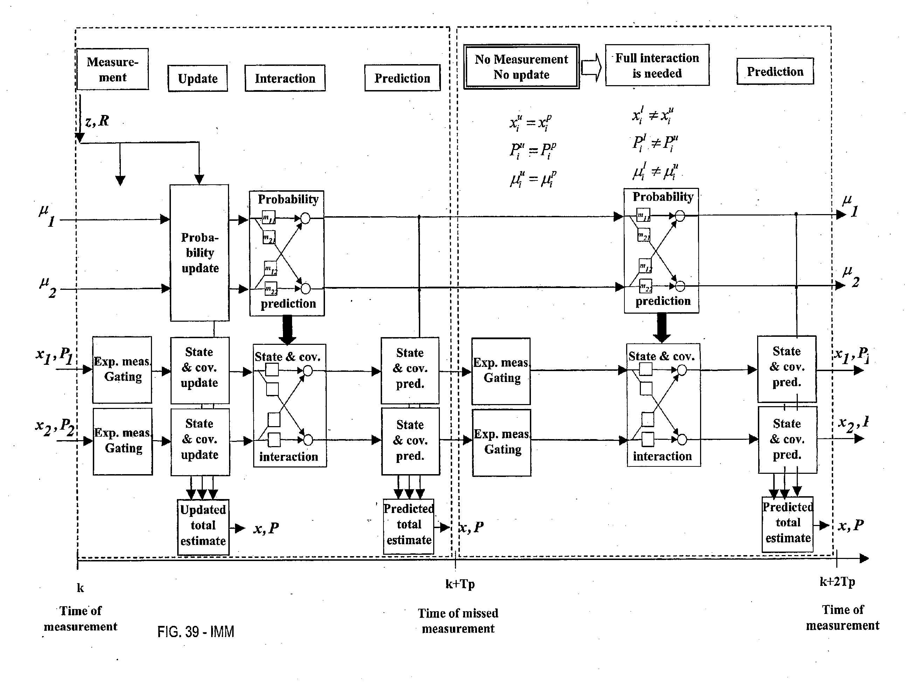

Fig. 39 shows a block diagram of the IMM filter for a two-model case. Fig. 39 shows the signal flow and the functional blocks for two cycles of calculations. Time is denoted by the time index k, when the measurements occur. The cycle duration may be any time Tp, constant or changing. In fig. 39, the measurement and state vectors are denoted z and x, with co-variance matrices R and P, respectively. The indices 1 and 2 refer to the two different models.
Fig. 39 shows the model probabilities $\mu$ and the functional blocks for the probability update and prediction, (9) and (10). Fig. 39 also shows the functional block for the "State & covariance interaction", (11) and that this interaction is "governed" by the probability prediction. This is the fundamental process of the IMM filter.

Problems with existing solutions

The main problem with high performance, sub-optimal Bayesian solutions (e.g. non-optimal MM, GPBEn for large n) is the computational burden. IMM is considered the best "cost effective" (i.e. performance vs. computations) solution today for many applications.
The mode merging coupled to the mode switch model of the IMM has many advantages, but the method is also associated with disadvantages. For instance the IMM comes from that the mode merging is coupled with the mode switch model. The IMM does not cause problems when prediction is done just once per measurement update cycle. However, there are many applications where this is not the case. Such applications may be:

- Sensors with probability of detection <1
- Uncertain association; when multiple predictions have to be performed to find the appropriate measurement data.
- Adaptive sensors, where repeated predictions are made to find out the best measurement time.
- Multi-sensor applications, where the expected measurement time is unknown and multiple predictions have to be done to find the appropriate set of measurement data
- Data prediction, in general, that is not measurement oriented.

Another problem with IMM is that the mutual interaction between a "maneuver model" and a "non maneuver model". When the system state is "non maneuver", makes the prediction volume smaller than anticipated from the design of the maneuver model. Should a maneuver occur, this may lead to track loss, if not the maneuver gate has been enlarged by other means [see ref. 3, Section 4.5.6, page 232)].
Prior art document US2002/0113729 shows a method for finding the range to a moving object by means of an angle only sensor.
In connection with the measurement, straight trajectory models (sub model) and maneuvering models which is shown as punctuated line in fig. 5 (complementary model) are predicted at the time of the measurement. The angle between the target and the sensor is measured. Predicted data for all the models in the form of their state vectors and covariance matrices are updated by means of measured data, to obtain new straight trajectory models, and new maneuvering models. The state vector X for a model may be defined in a two-dimensional Cartesian system.
The probability is calculated for each straight trajectory model, based on the assumption that the target moves on a straight trajectory, and for each maneuvering model on the assumption that the target maneuvers. The probability that the target will maneuver is calculated by comparing all maneuvering models with their straight trajectory models. If the probability that the target will maneuver fulfils a certain predetermined condition, data are taken to a predetermined extent from the respective maneuvering model when calculating the range of the target in the straight trajectory models that have associated maneuvering models. The range of the target from the sensor is calculated as a weighted average of a number of ranges according to the straight trajectory models, the weighting being based upon the respective probability of each straight trajectory model. The fact that data are taken to a predetermined extent from the respective maneuvering model when calculating the range of the target in the straight trajectory models that have associated maneuvering models means that data from the respective maneuvering model is allowed to interact with the respective straight trajectory model, for example in a way known from the so-called IMM method. In contrast, the straight-line model (sub-model) never influences the maneuver model (complementary model).

A similar approach has been described in document "Angle only tracking of maneuvering targets using adaptive-IMM multiple range models", By T. R. Kronhamn, RADAR 2002 Oct. 15-17, 2002Piscataway, NJ, USA, IEEE, 15 October 2002, pages 310 - 314, XP010626884 ISBN: 0-85296-750-0.

References

[1] B. Ristic, S. Arulampalam, and N. Gordon, Beyond the Kalman Filter, Particle Filters for Tracking Applications. Artech House, 2004.
[2] Y. Bar-Shalom, X. R. Li, and T. Kirubarajan, Estimation with Applications to Tracking and Navigation. New York: John Wiley & Sons, 2001.
[3] S. Blackman, and R. Popoli, Design and Analysis of Modern Tracking Systems, Artech House, 1999.
[4] H. A. P. Blom, "An Efficient Filter for Abruptly Changing Systems," in Proc. 23rd IEEE Conf. Decision and Control, Las Vegas, NV, Dec. 1984.

Summary of the invention

It is a first object of the invention to provide a prediction method based on a model set comprising at least one complementary model and at least one subset-model, which method may perform more accurately predictions for many applications and which is less computational burdensome than known methods in many applications.
This object has been achieved by the subject matter defined in claim 1.
It is a second object of the invention to provide a prediction method based on a model set comprising exclusively complementary models, which method may perform more accurately predictions for many applications and which is less computational burdensome than known methods in many applications.
This object has been achieved by the subject matter defined in claim 2.
It is a further object of the invention to set forth a method that further ameliorates the computational burden.
This object has been achieved by the subject matter defined by claim 3.
Further advantages will appear from the following detailed description of the invention.

Brief description of the drawings

Fig. 1 shows measurement tolerances relating to a radar system measuring the position of a flying object and corresponding predictions of future position and velocity of the flying object,

fig. 3 shows the calculation process for a general recursive model,

fig. 4 relates to a radar system, in which measurements are associated with elliptical Gaussian measurement tolerances,

fig. 5 shows well-known exemplary Gauss distributions,

fig. 6 shows a maneuver model,

fig. 7 shows a non-maneuver model,

fig. 8 shows a maneuver model comprising 3 complementary models,

fig. 9 shows a multiple model,

fig. 10 shows model merging according to the GPBE1 model,

fig. 11 - 15 show recursive phases involving prediction, measurement, update, re-arrangement and prediction of models,

fig. 16 - 17 show model prediction and update for the three-maneuver model of fig. 8

fig. 18 - 21 show model prediction and update for a model combination of the complementary model of fig. 6 and the sub-set model of fig. 7,

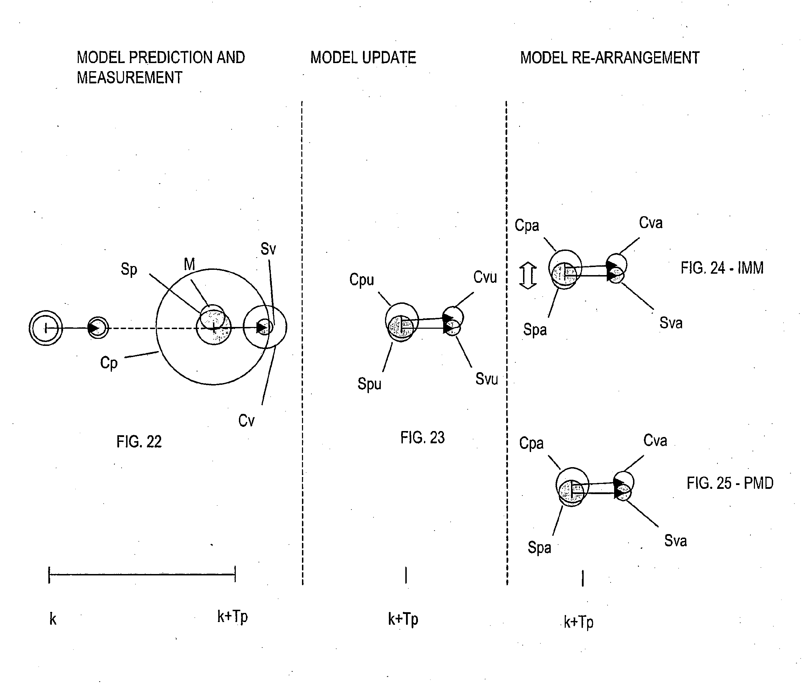

fig. 22 - 25 show model prediction, update and re-arrangement for the invention vis-a-vis the known IMM model for combined C and S model in which a measurement falls within the S model prediction,

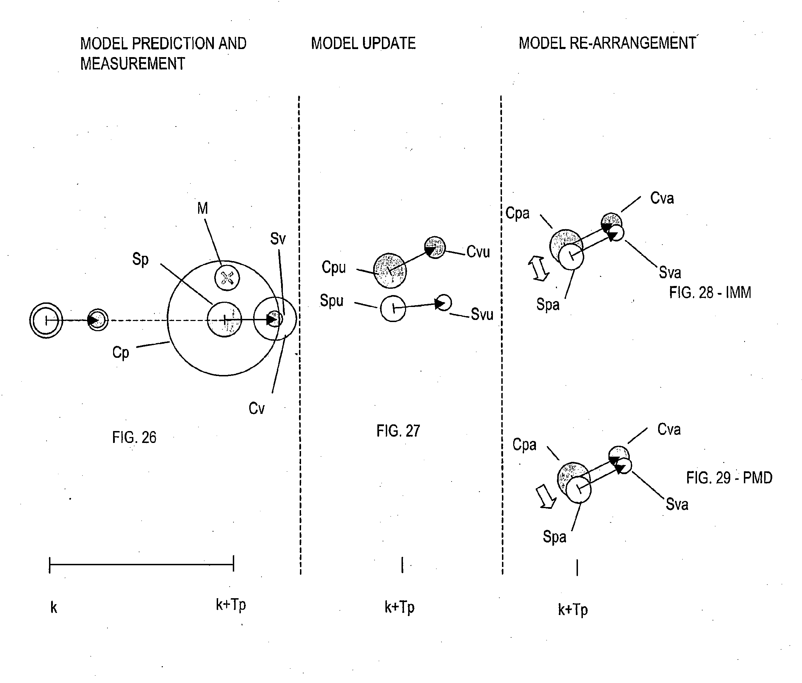

fig. 26 - 29 show model prediction, update and re-arrangement for the invention vis-à-vis the known IMM model for combined C and S model in which a measurement falls within the C model prediction,

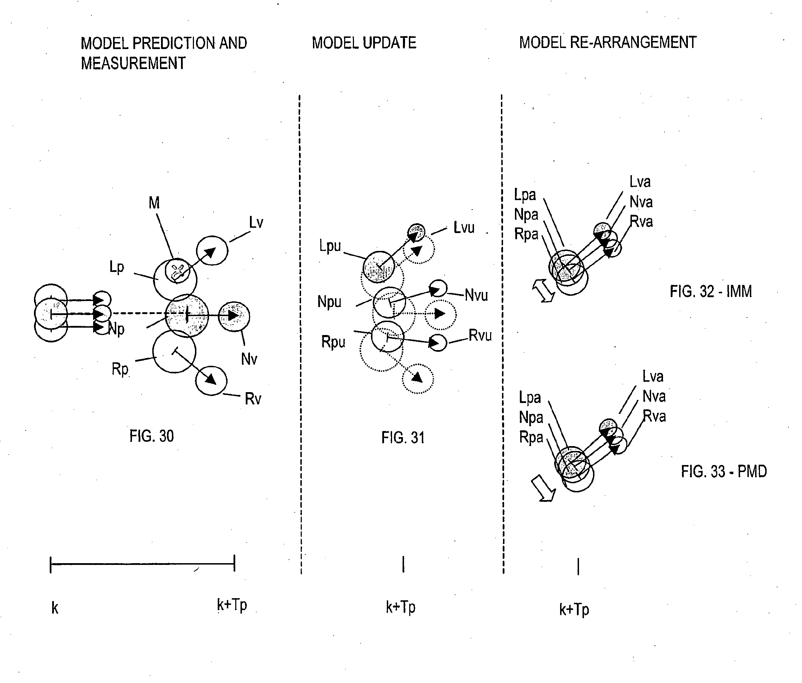

fig. 30 - 33 show model prediction, update and re-arrangement for the invention vis-à-vis the known IMM model for the three-maneuver model in which a measurement is clearly falling within the left turn prediction model,

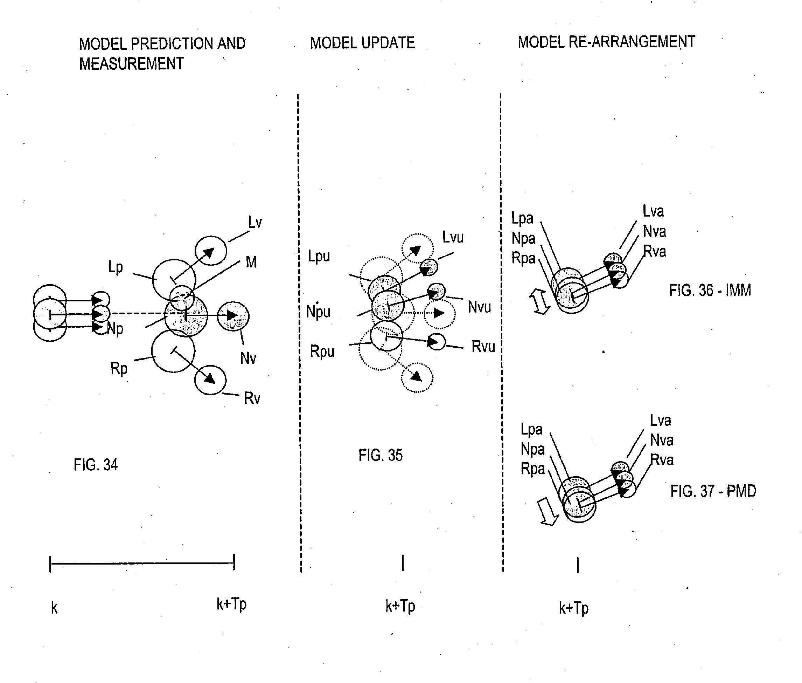

fig. 34 - 37 show model prediction, update and re-arrangement for the invention vis-à-vis the known IMM model for the three-maneuver model in which a measurement is falling between the left turn and straight on prediction models,

fig. 38 shows the position and velocity vector e.g. relating to a 2-dimensional depicting radar system,

fig. 39 shows the calculation process for the known IMM model for a first measurement instance for which a measurement is made and for a subsequent measurement instance for which a measurement is missed,

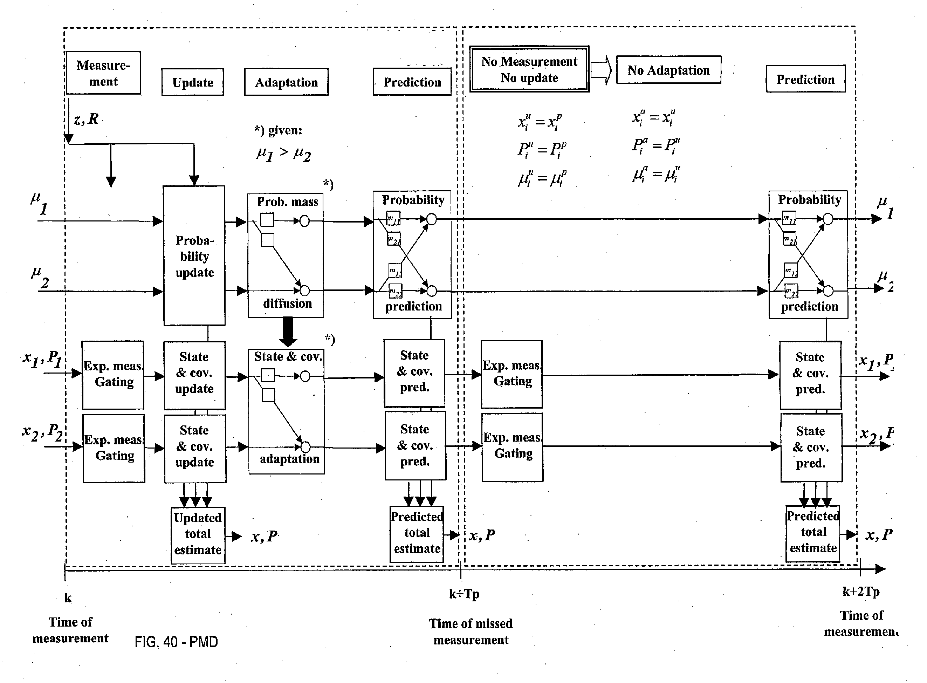

fig. 40 shows the calculation process for the invention for a first measurement instance for which a measurement is made and for a subsequent measurement instance for which a measurement is missed, and

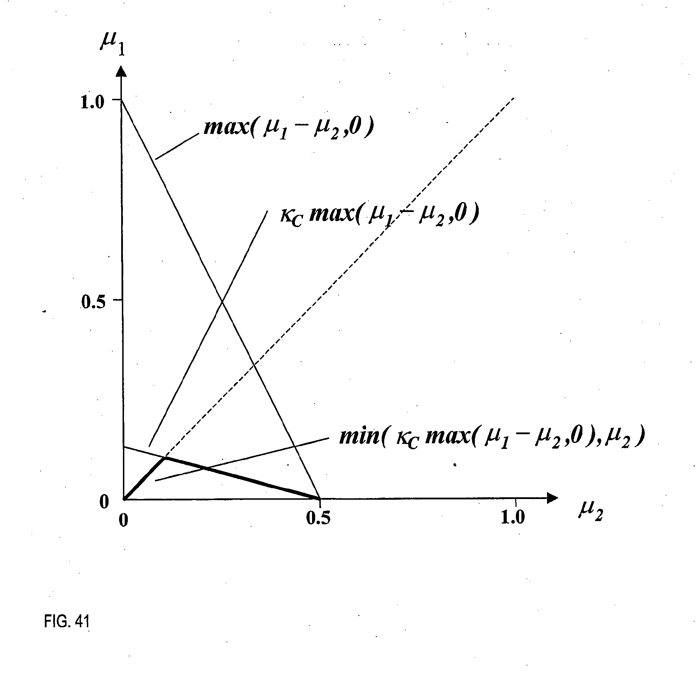

fig. 41 shows a further embodiment of the invention.

## Detailed description of preferred embodiments of the invention

The invention concerns a new concept - denoted the "probability mass diffusion" (PMD) principle - for re-arranging the model set after the measurement updates.

The present invention, shall initially be explained in more detail by focusing on the computational workings and effects in close relation to the IMM method as applied to a number of exemplary radar applications, while later expanding the description to general applications where recursive estimation of dynamic systems/signals are used.

For this purpose we shall initially focus on four examples, in which the same complementary model/ subset model is used for the PMD method and the IMM method, respectively and where the measurements fall either clearly within a given model or in an ambiguous area between models, respectively.

The indices are the same as defined above for figs. 16 - 21, except that being expanded with suffix a denoting the re-arranged model sets.

The IMM and the proposed method are equal in the measurement and update phases. The differences in the following re-arrangement (Interaction and adaptation respectively) will be described in the following.

Among others, the proposed method and the IMM differ in the manner the re-arrangement phase (Interaction and adaptation respectively) is carried out and in the amounts of the influences, which will be described in the following.

Figs. 22 - 25 relate to the subset/ complementary model for IMM and PMD for the case that a measurement M falls within the subset model Sp. Figs. 22 and 23 relate both to PMD and IMM, whereas fig 24 relates to IMM only and fig. 25 relates to PMD only.

In fig. 22, the velocity and position of the object are predicted according to a respective subset-model and a respective complementary model. According to the example, the measurement of the position M falls within both the complementary model and the supplementary position models.

In fig. 23, the position and velocity of both the complementary models Cpu and Cvu and the supplementary models Spu and Svu are displaced according to the position of the measurement. The standard deviations of all models are significantly reduced in relation to the predicted values. Since the measurement fell within the predicted models, the areas of the updated models will both contain the position of the measurement. The exact relations for the model updates can be formulated according to standard Kalman filter algorithms [2,3].

In fig. 24, the model re-arrangement according to the known IMM model is illustrated.

The respective complementary model, Cpu and Cvu, and the respective supplementary model, Spu and Svu, both influence one another, such that the values and the probabilities of Cpa and Cva as well as Spa and Sva are changed.

According to the PMD method, no interaction of models takes place in this given scenario, which means that Cpa and Cva are equal to Cpu and Cvu, respectively, and that Spa and Sva are equal to Spu and Svu, respectively. This is true for the case that the probability of the subset model is higher than the probability of the complementary model, which is the normal outcome when the measurement was obtained within the areas of both models. However, there may be marginal cases and sometimes also a dependence on previous measurements that not lead to this situation.

Hence, if the measurement falls within the subset model, S, and the updated probability of the subset model becomes highest, the respective models, C, S, do not influence one another under the step of re-arrangement.

The arrows in figures 22 - 37 indicate which model or models influence another or other models. Please note that the displacement of the influenced model may move in another direction than indicated by the arrow.

Figs. 26 - 29 relate to the subset/ complementary model for IMM and PMD for the case that a measurement M falls outside the subset model Sp, but within the complementary model. Figs. 26 and 27 relate both to PMD and IMM, whereas fig 28 relates to IMM only and fig. 29 relates to PMD only.

In fig. 27 it is seen that the complementary model is substantially displaced, while the subset model is less affected. The reason is that the design of the complementary model makes it more willing for large displacements (as long as they are within the area Cp). The subset model design makes it not willing for displacements outside the area Sp. The update is performed according to the relations mentioned above.

In fig. 28, relating to the known IMM model it appears that both models mutually influence one another.

In fig. 29 though, only the complementary model influence the subset-model.

Hence, if the measurement falls outside the subset model, S, and the updated probability of the subset model becomes lowest, only the complementary model, C, influences the subset, S, model under the step of re-arrangement.

Figs. 30 - 33 relate to a three maneuver Gaussian model for IMM and PMD for the case that a measurement M falls within one of the maneuver models. Figs. 30 and 31 relate both to PMD and IMM, whereas fig 32 relates to IMM only and fig. 33 relates to PMD only.

In fig. 31, the model update, which is common both for the IMM and the PMD methods are shown. It is seen that the models are displaced in direction of the measurement as indicated, white the probabilities are also updated so that the given maneuver model, within which the measurement fell, gains the highest probability.

In fig. 32, relating to IMM, it is illustrated that all models influence one another, both with respect to displacement of models and with respect to re-evaluation of probabilities.

In fig. 33, relating to PMD, it is illustrated that only the models within which the measurement fell influence the remaining models, both with respect to displacement of models and with respect to re-evaluation of probabilities. This shall be understood as the PMD-principle for C-models, that models with higher probability influences models with lower probabilities.

In the fig. 33 scenario, models of higher probabilities influence models of lesser probabilities. If three models of gradual probabilities occur, the model of highest probability influences the two other models, while the model of the medium probability influences the model of least probability.

Hence, if the measurement falls within a given model, L, N, R, and the updated probability of the model within the measurement becomes highest, only the model for which the measurement fell, influences the remaining models under the step of re-arrangement. As can be understood, the number of required computational operations is decreased.

Figs. 34 - 37 relate to a three maneuver Gaussian model for IMM and PMD for the case that a measurement M falls between two maneuver models. Figs. 34 and 35 relate both to PMD and IMM, whereas fig 36 relates to IMM only and fig. 37 relates to PMD only.

In fig. 35, the model update, which is common both for the IMM and the PMD methods are shown. It is seen that all models are displaced in direction of the measurement M as indicated, while the probabilities are also updated so that the two given maneuver models, between which the measurement fell, gain the highest probabilities.

In fig. 36, relating to IMM, it is illustrated that all models influence one another, both with respect to displacement of models and with respect to re-evaluation of probabilities.

In fig. 37, relating to PMD, it is illustrated that only the models between which the measurement fell influence the remaining model, both with respect to displacement of models and with respect to re-evaluation of probabilities. This shall be understood as the PMD-principle for C-models, that models with higher probability influences models with lower probabilities and that in this case two of the models have the same probability.

Hence, if the measurement falls between two given models, L, N, R, whereby the updated probability of the models between the measurement fell becomes equal, only the particular two models between which the measurements fell, influences the remaining model or models under the step of re-arrangement. As can be understood the number of required computational operations are decreased.

Terminology

We shall now describe the inventive method in general terms replacing the terms referring to the various PDF's of figs 16 - 37 with general notions of mean value, standard deviation and probability of corresponding PDF's.
The following explanation for a left turn maneuver PDF is given, noting that a full explanation for all parameters would not be necessary:

| prediction | update | re-arrangement: adaptation (a)/ interaction (I) | PDF parameters |
|---|---|---|---|
| Lpp, Lvp | Lpu; Lvu | Lpa; Lva | |
| $x_i^p$ $P_i^p$ $\mu_i^p$ | $x_i^u$ $P_i^u$ $\mu_i^u$ | $x_i^l$, $x_i^a$ $P_i^l$, $P_i^a$ $\mu_i^l$, $\mu_i^a$ | mean value / state vector covariance matrix probability |

In the following, suffix I relates to the parameters used under re-arrangement according to the IMM method, while suffix a relates to the re-arrangement under the PMD method according to the invention, and suffix i relates to any given model/PDF (subset/ complementary, exclusively complementary).
In the description of the prior art, the common notation of time has been used, denoting the time instants of measurements (and data updates) with the time index k. A constant time T between these instants is often assumed. In the description of the invention, the more general notation of a time instant as $t_k$ and the time between measurements as $T_p$ is applied. Hence in the present context, a time instant $k$ corresponds to $t_k$ and $k+1$ to $t_k + T_p$. The use of time indices k and k+1, in the descriptions of the prior art, have the corresponding notation u for k|k and p for k+1|k in the descriptions of the invention.

Model adaptation by probability mass diffusion; Basic process

One aspect of the probability mass diffusion according to the present invention is that probability mass is flowing from models with higher probabilities to models with lower probabilities. Given two models, where $\mu_2 > \mu_1$ that is:

$$\mu_1^a = \mu_1^u + \Delta\mu_{12},$$
$$\mu_2^a = \mu_2^u - \Delta\mu_{12},$$
\hfill (14)

where index $a$ indicates the re-arranged probabilities and index $u$ indicates the probabilities obtained at the model update by a measurement.

The flow is a function of the difference in probability. According to a preferred embodiment of the invention, the amount is directly proportional, i.e. for the case above

$$\Delta\mu_{12} = \kappa(\mu_2^u - \mu_1^u),$$
\hfill (15)

where $\kappa$ is the diffusion constant.

The influence on the model data is

$$x_1^a = \left(\mu_1^u x_1^u + \Delta\mu_{12} x_2^u\right)/\mu_1^a$$
$$x_2^a = x_2^u$$
\hfill (16)

and

$$P_1^a = \left(\mu_1^u \left(\Delta x_{11} \Delta x_{11}' + P_1^u\right) + \Delta \mu_{12} \left(\Delta x_{12} \Delta x_{12}' + P_2^u\right)\right) / \mu_1^a$$
$$P_2^a = P_2^u \tag{17}$$

where

$$\Delta x_{11} = x_1^u - x_1^a$$
$$\Delta x_{12} = x_2^u - x_1^a \tag{18}$$

Of importance for the estimation according to the invention is also the view of models as either C- or S-models, as described in the previous section. For C-models the diffusion may go in any direction as given by the probability gradient. Between C- and S-models there can only be a flow from the C- to the S-models, not vice versa. The diffusion constant, $\kappa_C$, is low for the flow between C-models, as they should be as independent as possible. The diffusion constant, $\kappa_S$, is high for the flow from C- to S-models, as the S-model always should be within the bounds of the C-model(s). These constants are design parameters and should be chosen to best suit the given application. Typical values may be in the intervals

$$\kappa_C \in (0.01, 0.1) \tag{19}$$

and

$$\kappa_S \in (0.1, 0.5). \tag{20}$$

The re-arrangement process described above can, according to a further embodiment, be expanded to work over a large set of models (C-models), mimicking a diffusion process even in this respect. Such a re-arrangements process for a large group of models may be realized in different ways. One way is to start at the model with the highest probability, let it "influence" its nearest neighboring models and then let those models influence the next closest of the models in the probability gradient direction, like a "waterfall" (or rings in the water), until the entire set is covered. Another preferred way, computationally, according to the invention is a "one-step method", described below, where the "influence" is rendered dependent on a parameter which we shall denote as the "model distance".

In summary, the process can be described as:

A method of performing a sequence of measurements, z, R; M; $(t_1, t_2)$, of at least one parameter and recursively performing predictions of at least the same or at least another parameter, the prediction method being based on - for a number of prediction periods for instance corresponding to each possible measurement instance $(t_k, t_k + T_p)$ - defining a model set (PDF) comprising at least two alternative models (PDF) having respective different mean values $(x_i^p,...)$, respective covariance matrices $(P_i^p,...)$ and corresponding respective probabilities $(\mu_i^p,...)$, the models (PDF) approximating possible outcomes, for instance corresponding to various maneuvers in a two-dimensional plane. The method comprising the steps of

- based on at least on a first measurement instance (M $(t_k)$), <u>predicting</u> the outcome (x, P) for at least two models (C, S),
- after a subsequent measurement instance (M $(t_k + T_p)$) <u>updating</u> the models (C, S) for the corresponding point in time, whereby the prediction made on the basis of the first measurement instance is updated in the light of the subsequent measurement instance,

and

- <u>re-arranging</u> at least one model (C, S) for the subsequent measurement instance $(t_k + T_p)$, whereby one updated model influences another updated model.

For a model set comprising at least one complementary (C) model and at least one sub (S) model, under the step of re-arranging the S model never influences the C model.

For a model set comprising exclusively complementary (L, N, R) models, under the step of re-arranging, for a given pair of models within the model set (L, N, R), a model having a higher probability ($\mu$) influences a model having a lesser probability, but wherein a model having a lesser probability ($\mu$) never influences a model having a higher probability.

The "re-arrangement", or adaptation, of models according to the methods above fulfils the following requirements of the invention of altering the PDF as little as possible and of leaving the models/filters independent of each other as much as possible. The rational of these requirements can be understood from the optimal MM where there is no re-arranging of filters as all mode sequences are kept and from, sub-optimal solutions, where the re-arranging is a "necessary evil" that secure that the correct mode sequence is reasonably well represented.

For further aspects of the invention it applies that a first model j having a probability ($\mu_j$) changes the probability ($\mu_i$) of a second model i according to:

$$\mu_i^a = \mu_i^u + \Delta\mu_{ij}$$
$$\mu_j^a = \mu_j^u - \Delta\mu_{ij} \tag{21}$$

where

$$\Delta\mu_{ij} = \kappa(\mu_j^u - \mu_i^u) \tag{22}$$

given that $\mu_j^u > \mu_i^u$, wherein $\kappa$ is a constant.

Model adaptation by probability mass diffusion; Matrix form

The step of model update and the step of model prediction according to the invention take the same form as described for IMM in the background of the invention.

In the following, the step of model adaptation according to the invention that corresponds to the step of model interaction of the IMM is described.

The equations describing the basic process may be given in matrix form for any given number of models, as an alternative to the previously indicated equations (14) - (18), whereby suffix $p$ =predicted, $I$ =interacted, $a$ =adapted and $u$ =updated probabilities. Matrix $M_p$ is the probability prediction matrix and $M_d$ is the probability diffusion matrix.

The key is to write the probability mass diffusion in matrix form. We introduce the probability diffusion matrix $M_d$, defined as

$$\mu^a = M_d\mu^u, \tag{23}$$

consequently, the complete cycle of probability calculations can be written as

$$\mu^P = M_p\mu^a = M_pM_d\mu^u \tag{24}$$

The corresponding expression for IMM is:

$$\mu^P = \mu^I = M_p\mu^u \tag{25}$$

With this notation the PMD model adaptation may be written in the same form as the IMM interaction, but now with the probability diffusion matrix.

$$x_i^a = \sum_j m_{d,ij} \mu_j^u x_j^u / \mu_i^a \qquad (26)$$

$$P_i^a = \sum_j m_{d,ij} \mu_j^u \left( \Delta x_{ij} \Delta x_{ij}^T + P_j^u \right) / \mu_i^a \qquad (27)$$

where

$$\Delta x_{ij} = x_j^u - x_i^a . \qquad (28)$$

The above equations corresponds to the IMM-interaction

$$x_i^I = \sum_j m_{p,ij} \mu_j^u x_j^u / \mu_j^I \qquad (29)$$

$$P_i^I = \sum_j m_{p,ij} \mu_j^u \left( \Delta x_{ij} \Delta x_{ij}^T + P_j^u \right) / \mu_i^I , \qquad (30)$$

where

$$\Delta x_{ij} = x_j^u - x_i^I . \qquad (31)$$

The detailed definition of the probability diffusion matrix $M_d$ based on the one-step method given above is as follows:

A set of models, designed to represent a given PDF, is most likely ordered along some main system parameter(s). In the case used in the invention, this is the turn rate $\omega$ of the prediction model. In the three-model case, the three C-models having turn rates of $(-\omega, 0, \omega)$ are given the model indices $i \in (1,2,3)$ The "model distance" $d_m$ is defined as

$$d_m = |i - j| \qquad (32)$$

for any two (selected) models in the set. A similar distance measure should always be possible to define even in multi-dimensional sets of models.

According to the invention, the probability mass diffusion is performed in one step and the diffusion constant for C-models is defined as

$$\kappa = \left( \kappa_C \right)^{|i-j|} , \qquad (33)$$

where $i$ and $j$ are the model numbers defined above.

The diffusion equations (14)-(18) may be written in matrix form for a general number of S- and C-models as described below.

First, the diffusion matrix, $M_d$, and the probability vector, $\mu$, are subdivided into the parts related to the S- and C-models respectively. That is

$$M_d = \begin{bmatrix} I. & M_{dS} \\ 0 & M_{dC} \end{bmatrix} \qquad (34)$$

and

$$\mu = \begin{bmatrix} \mu_S \\ \mu_C \end{bmatrix} \qquad (35)$$

The elements of $M_d$ are, for the case of a single S-model:

$$I = 1 \qquad (36)$$

and $M_{dS}$ is the row matrix

$$M_{dS} = \left\{ m_{dS,j} \right\}_{j=1}^{N_C}, \qquad (37)$$

where $N_C$ is the number of C-models and where the elements are of the form:

$$m_{dS,j} = \kappa_S \max\left(\mu_{C,j} - \mu_S, 0\right) / \mu_{C,j} \qquad (38)$$

A single S-model can be chosen to be influenced either by one of the C-models, by each of the C-models individually or by the joint C-model estimate. As described, a single S-model is influenced by each of the C-models individually.

The elements of the matrix $M_{dC}$ are of the form

$$m_{dC,ij} = \left(\kappa_C\right)^{|i-j|} \max\left(\mu_{C,j}^u - \mu_{C,i}^u, 0\right) / \mu_{C,j}^u \qquad (39)$$

for $i \neq j$ and where $i$ and $j$ are C-model numbers. The diagonal elements of the submatrix $M_{dC}$ are

$$m_{dC,ii} = 1 - \left( m_{dS,i} + \sum_{k=1}^{N_C} m_{dC,ki} \right) \qquad (40)$$

These equations show the basic diffusion process as described above. However, a minor modification is shown in the section below.

Limitation of transferred mass

When the transferred probability mass is far greater than the probability of the recipient, the resulting effect on the state estimate of the recipient model is large and in the limit it will become equal to the estimate of the donor model estimate. If the diffusion process is performed as a one-step procedure, this may lead to that the order, or in other words, the spatial relationships, of the models may be changed. Here is shown a preferred way of executing a limitation of diffused probability mass that will preserve the order of the models. The equation (39) above is now written

$$m_{dC,ij} = \min\left(\left(\kappa_C\right)^{|i-j|} \max\left(\mu_{C,j}^u - \mu_{C,i}^u, 0\right), \mu_{C,j}^u\right) / \mu_{C,j}^u \qquad (41)$$

Various steps of calculating this equation have been shown graphically in fig. 41.

Block diagram of the invention

Fig. 40 shows a block diagram of the invention for a two-model case closely corresponding to the IMM method depicted in fig. 39.

The signal flow graph, depicted within the functional blocks Prob. mass diffusion and State & cov. adaptation, refers to first scenario with one C-model and one S-model, where model 1 ($\mu_1$) is the C-model and where the C-model has the highest probability. The signal flow graph may also refer to a scenario with two C-models where model 1 ($\mu_1$) has the highest probability.

Comparing the first measurement cycles of fig. 39 and fig. 40, it appears that the probability mass diffusion and the state and covariance adaptation according to the invention are separated from the probability prediction.

Advantages of the Invention

The main advantages of the invention are:

- the method requires less computations (than IMM), in many applications, for two reasons:

    - - The diffusion matrix always contains a number of zero elements. This is not always the case for the corresponding operation in IMM

    - - Separated model adaptation and model prediction are separated saves computations when multiple predictions are made per measurement occasion

- Avoidance of too small track gates (small track gates described by S. Blackman, and R. Popoli, Design and Analysis of Modern Tracking Systems, Artech House, 1999). In other words, a better prediction of the spatial probability density function is obtained.
- More accurate results (than IMM) are obtained, as confirmed by extensive simulations.

Computational aspects

The second measurement cycle of fig. 39 is an illustration of the IMM recursive loop processing for a situation where at time k+Tp, a measurement is missing, whereby two PDF's, suffix 1 and 2, are used for modeling, e.g. a complementary / subset model scenario.

The second measurement cycle of fig. 40 is an illustration of the PMD recursive loop processing for a situation where at time k+Tp, a measurement is missing, whereby two PDF's, suffix 1 and 2, are used for modeling, e.g. a complementary / subset model scenario.

For both situations above it appears that since there is no measurement at time k+1, the update leaves parameters unchanged from the predicted values, that is,

$$x_i^u = x_i^p$$
$$P_i^u = P_i^p \qquad (42)$$
$$\mu_i^u = \mu_i^p$$

Hence, both the IMM method and the PMD method require fewer computational steps for the update process when a measurement is lacking.

However, when performing interaction (IMM) / re-arrangement (PMD), a comparison of figs 39 and 40 reveals that according to the IMM method all PDF models interact in order to produce the predicted values according to the IMM method, while no adaptation is needed according to the PMD process according to the invention. As can be readily understood, the computational requirements of the invention are considerably reduced for the situation where a measurement is lacking.

It also applies that when measurements are in fact accomplished consecutively, the PMD process is less computational demanding than IMM, although the effect becomes particular clear when examining the situation for lacking measurements. An advantage of the invention, compared to IMM, from a computational point of view, is that the diffusion matrix $M_d$ is never a full matrix (half of the off-diagonal elements are zero), which often is not the case with $M_p$ used in the IMM model interaction.

In applications in which multiple predictions are made for each measurement update, according to the invention, only one re-arrangement is necessary.

It is noted that in typical radar applications, measurements may occasionally not be provided for many reasons, such as low signal / interference figures etc.

In other applications where several predictions have to be made for each update, the same computational advantages of the invention exist. The computational facilitation also applies for applications where there are several measurements of which only one (or none) should be used. Another such application is when multiple predictions have to be made in order to establish the best time for the measurement to be applied.

## Claims

1. Method of performing a sequence of measurements (z, R; M; ($t_1$,$t_2$)) relating to a state vector (Pos, Vel; x, P) and recursively performing predictions of the state vector (Pos, Vel; x, P),
the prediction method being based on defining a model set (PDF) comprising at least two alternative models (PDF) having respective different mean values ($x_i^p$,...), respective covariance matrices ($P_i^p$,...) and corresponding respective probabilities ($\mu_i^p$,...), the models (PDF) approximating possible outcomes, for instance corresponding to various maneuvers in a two-dimensional plane,

   - the model set (PDF) comprising at least one complementary (C) model and at least one subset (S) model,

   the method comprising the steps of

   - based on at least on a first measurement instance (M($t_k$); (k)), predicting ($x_i^p$, $P_i^p$, $\mu_i^p$; $x_j^p$, $P_j^p$, $\mu_j^P$) the outcome for at least two models (C, S; i, j),
   - after a subsequent measurement instance (M ($t_k + T_p$);(k+Tp)) updating ($x_i^u$, $P_i^u$, $\mu_i^u$; $x_j^u$, $P_j^u$, $\mu_j^u$) the models (C, S; i, j) for the corresponding point in time, whereby the prediction made on the basis of the first measurement instance is updated in the light of the subsequent measurement instance,
   - re-arranging ($x_i^a$, $P_i^a$, $\mu_i^a$; $x_j^a$, $P_j^a$, $\mu_j^a$) at least one model (C, S; i, j) for the subsequent measurement instance ($t_k + T_p$) (k+Tp), whereby one (C; i) updated model influences another (S; j) updated model, **characterized in that** according to the step of re-arranging, the subset model (S; i) never influences a state vector (x) nor a co-variance matrix (P) of the complementary model (C; j),

   the step of re-arranging involves that

   $$\mu_1^a = \mu_1^u + \Delta\mu_{12},$$
   $$\mu_2^a = \mu_2^u - \Delta\mu_{12}, \qquad\qquad (14)$$

   where index $a$ indicates the re-arranged probabilities and index $u$ indicates the probabilities obtained at the model update by a measurement, where $\mu_2 > \mu_1$, and where

   $$\Delta\mu_{12} = \kappa(\mu_2^u - \mu_1^u), \qquad\qquad (15)$$

   where $\kappa$ is a diffusion constant, and where

   the influence on the model data is

$$x_1^a = \left(\mu_1^u x_1^u + \Delta\mu_{12} x_2^u\right)/\mu_1^a$$
$$x_2^a = x_2^u \tag{16}$$

and

$$P_1^a = \left(\mu_1^u \left(\Delta x_{11}\Delta x_{11}' + P_1^u\right) + \Delta\mu_{12}\left(\Delta x_{12}\Delta x_{12}' + P_2^u\right)\right)/\mu_1^a$$
$$P_2^a = P_2^u \tag{17}$$

where

$$\Delta x_{11} = x_1^u - x_1^a$$
$$\Delta x_{12} = x_2^u - x_1^a \tag{18}$$

where index 1 refers to the subset model and index 2 refers to the complementary model, $\mu$ refers to the probability for the given model and, x refers to the state vector and P refers to a co-variance matrix, index u refers to updating and index a refers to the re-arranging.

2. Method of performing a sequence of measurements (z, R; M; $(t_1,t_2)$) relating to a state vector (Pos; Vel; x, P) and recursively performing predictions of the state vector (Pos, Vel; x, P),
the prediction method being based on defining a model set (PDF) comprising at least two alternative models (PDF) having respective different mean values ($x_i^p$,...), respective covariance matrices ($P_i^p$,...) and corresponding respective probabilities ($\mu_i^p$,...), the models (PDF) approximating possible outcomes, for instance corresponding to various maneuvers in a two-dimensional plane,

- the model set comprising exclusively complementary (L, N, R; i, j) models,

the method comprising the steps of

- based on at least on a first measurement instance (($M(t_k)$; (k)), predicting ($x_i^p$, $P_i^p$, $\mu_i^p$; $x_j^p$, $P_j^p$, $\mu_j^p$) the outcome (x, P) for at least two models (L, N, R; i, j),
- after a subsequent measurement instance ($M(t_k + T_p)$;(k+Tp)) updating ($x_i^u$, $P_i^u$, $\mu_i^u$; $x_j^u$, $P_j^u$, $\mu_i^u$) the models (L, N, R; i, j) for the corresponding point in time, whereby the prediction made on the basis of the first measurement instance is updated in the light of the subsequent measurement instance,
- re-arranging ($x_i^a$, $P_i^a$, $\mu_i^a$; $x_j^a$, $P_j^a$, $\mu_j^a$) at least one model (L, N, R; i, j) for the subsequent measurement instance (($t_k + T_p$); (k+Tp)), whereby one updated model influences another updated model, wherein for a given pair of models within the model set (L, N, R; i, j), a model having a higher probability ($\mu$) influences a model having a lesser probability, **characterized in that**

for the step of re-arranging, for a given pair of models within the model set (L, N, R; i, j), a model having a lesser probability ($\mu$) never influences a state vector (x) nor a co-variance matrix (P) of a model having a higher probability, the step of re-arranging moreover involves that

$$\mu_1^a = \mu_1^u + \Delta\mu_{12}$$
$$\mu_2^a = \mu_2^u - \Delta\mu_{12},$$

where index *a* indicates the re-arranged probabilities and index u indicates the probabilities obtained at the model update by a measurement, where $\mu_2 > \mu_1$ and where

$$\Delta\mu_{12} = \kappa(\mu_2^u - \mu_1^u),$$

where $\kappa$ is a diffusion constant, and where

the influence on the model data is

$$x_1^a = \left(\mu_1^u x_1^u + \Delta\mu_{12} x_2^u\right)/\mu_1^a$$
$$x_2^a = x_2^u$$

and

$$P_1^a = \left(\mu_1^u\left(\Delta x_{11}\Delta x_{11}^{'} + P_1^u\right) + \Delta\mu_{12}\left(\Delta x_{12}\Delta x_{12}^{'} + P_2^u\right)\right)/\mu_1^a$$
$$P_2^a = P_2^u$$

where

$$\Delta x_{11} = x_1^u - x_1^a$$
$$\Delta x_{12} = x_2^u - x_1^a$$

where index 1 and index 2 refer to different models, $\mu$ refers to the probability for the given model and, x refers to the state vector and P refers to a co-variance matrix, index u refers to updating and index a refers to the re-arranging.

3. Method according to claim 1 or 2, in which multiple predictions are made for each measurement update, wherein only one re-arrangement is necessary.

4. Method according to any of claims 1-3, wherein proportionality constants, $\kappa_C$ and $\kappa_S$, are in the intervals

$$\kappa_C \in (0,01;0,1) \tag{19}$$

whereby $\kappa_C$ eqauls $\kappa_C$ for flow between complementary models
and

$$\kappa_S \in (0,1;0,5), \tag{20}$$

whereby $\kappa$ eqauls $\kappa_S$ for flow from complementary models to subset models.

5. Method according to claim 2, wherein for a one-dimensional model set, the proportionality constant as

$$\kappa = \left(\kappa_C\right)^{|i-j|} \tag{33}$$

where |i-j| is a natural number, which corresponds to the model distance).

6. Method according to claim 1 or 2, wherein the step of rearrangement is a one step procedure.

7. Method according to claim 1, whereby if the measurement falls within the subset model (S), and the updated probability of the subset model becomes highest, the respective models (C, S) do not influence one another under the step of re-arrangement with regard to state vectors (x) and co-variance matrices (P).

8. Method according to claim 1, whereby if the measurement falls outside the subset model (S) and the updated probability of the subset model becomes lowest, only the complementary model (C) influences the subset (S) model under the step of re-arrangement with regard to state vectors (x) and co-variance matrices (P).

9. Method according to claim 2, whereby if the measurement falls within a given model (L, N, R), and the updated probability of the model within the measurement becomes highest, the model for which the measurement fell, influences the remaining models under the step of re-arrangement.

10. Method according to claim 9 wherein models of higher probabilities influence models of lesser probabilities.

11. Method according to claim 2, whereby if the measurement falls between two given models (L, N, R), whereby the updated probability of the models between the measurement fell becomes equal, only the particular two models between which the measurements fell, influences the remaining model or models under the step of re-arrangement with regard to state vectors (x) and co-variance matrices (P).

12. Method according to any of claims 1 - 11 being used for a radar application (R), whereby at least the position (Pos) of an object is sensed or derived in two dimensional coordinates and whereby some of the probability models correspond to the associated forthcoming position (Pos) in two dimensional coordinates.


**Patentansprüche**

1. Verfahren zum Durchführen einer Sequenz von Messungen (z, R; M; ($t_1$, $t_2$)) in Bezug auf einen Zustandsvektor (Pos, Vel; x, P) und zum rekursiven Durchführen von Vorhersagen des Zustandsvektors (Pos, Vel; x, P),
wobei das Vorhersageverfahren auf dem Definieren eines Modellsatzes (PDF) basiert, welcher mindestens zwei alternative Modelle (PDF) mit entsprechenden unterschiedlichen Mittelwerten ($x_i^p$, ...), entsprechenden Kovarianz-matrizen ($P_i^p$, ...) und korrespondierenden entsprechenden Wahrscheinlichkeiten ($\mu_i^p$, ...) umfasst, wobei die Modelle (PDF) mögliche Ergebnisse annähern, zum Beispiel entsprechend verschiedener Manöver in einer zweidimensionalen Ebene,

- wobei der Modellsatz (PDF) mindestens ein komplementäres (C) Modell und mindestens ein Untersatz (S) -Modell umfasst,

wobei das Verfahren folgende Schritte umfasst

- basierend auf mindestens einer ersten Messungsinstanz (M($t_k$) ; (k)), Vorhersagen ($x_i^p$, $P_i^p$, $\mu_i^p$; $x_j^p$, $P_j^p$, $\mu_j^p$) des Ergebnisses für mindestens zwei Modelle (C, S; i, j),
- nach einer anschließenden Messungsinstanz (M($t_k + T_p$); (k+Tp)), Aktualisieren ($x_i^u$, $P_i^u$, $\mu_i^u$; $x_j^u$, $P_j^u$, $\mu_j^u$) der Modelle (C, S; i, j) für den entsprechenden Zeitpunkt, wodurch die Vorhersage, die auf der Grundlage der ersten Messungsinstanz getroffen wurde, angesichts der anschließenden Messungsinstanz aktualisiert wird,
- Neuanordnen ($x_i^a$, $P_i^a$, $\mu_i^a$; $x_j^a$, $P_j^a$, $\mu_j^a$) von mindestens einem Modell (C, S; i, j) für die anschließende Messungsinstanz ($t_k+T_p$) (k+Tp), wodurch ein (C; i) aktualisiertes Modell ein anderes (S; j) aktualisiertes Modell beeinflusst, **dadurch gekennzeichnet, dass**

gemäß dem Schritt der Neuanordnung, das Untersatz-Modell (S; i) niemals weder einen Zustandsvektor (x) noch eine Kovarianzmatrix (P) des komplementären Modells (C; j) beeinflusst,
der Schritt des Neuanordnens beinhaltet, dass

$$\mu_1^a = \mu_1^u + \Delta\mu_{12}$$
$$\mu_2^a = \mu_2^u - \Delta\mu_{12},$$

$$(14)$$

wobei der Index $a$ die neuangeordneten Wahrscheinlichkeiten anzeigt und der Index u die Wahrscheinlichkeiten anzeigt, welche bei der Modellaktualisierung durch eine Messung erhalten werden, wobei $\mu_2 > \mu_1$, und wobei

$$\Delta\mu_{12} = \kappa(\mu_2^u - \mu_1^u) \,, \tag{15}$$

wobei $\kappa$ eine Diffusionskonstante ist, und wobei

der Einfluss auf die Modelldaten folgender ist

$$x_1^a = \left(\mu_1^u x_1^u + \Delta\mu_{12} x_2^u\right)/\mu_1^a$$
$$x_2^a = x_2^u \tag{16}$$

und

$$P_1^a = \left(\mu_1^u\left(\Delta x_{11}\Delta x_{11}^{'} + P_1^u\right) + \Delta\mu_{12}\left(\Delta x_{12}\Delta x_{12}^{'} + P_2^u\right)\right)/\mu_1^a$$
$$P_2^a = P_2^u \tag{17}$$

wobei

$$\Delta x_{11} = x_1^u - x_1^a$$
$$\Delta x_{12} = x_2^u - x_1^a \,, \tag{18}$$

wobei sich Index 1 auf das Untersatz-Modell bezieht und sich Index 2 auf das komplementäre Model bezieht, sich $\mu$ auf die Wahrscheinlichkeit für das gegebene Modell bezieht, sich x auf den Zustandsvektor bezieht und sich P auf eine Kovarianzmatrix bezieht, sich Index u auf das Aktualisieren bezieht und sich Index a auf das Neuanordnen bezieht.

2. Verfahren zum Durchführen einer Sequenz von Messungen (z, R; M; ($t_1$, $t_2$)) in Bezug auf einen Zustandsvektor (Pos, Vel; x, P) und zum rekursiven Durchführen von Vorhersagen des Zustandsvektors (Pos, Vel; x, P), wobei das Vorhersageverfahren auf dem Definieren eines Modellsatzes (PDF) basiert, welcher mindestens zwei alternative Modelle (PDF) mit entsprechenden unterschiedlichen Mittelwerten ($x_i^p$, ...), entsprechenden Kovarianz-matrizen ($P_i^p$, ...) und korrespondierenden entsprechenden Wahrscheinlichkeiten ($\mu_i^p$, ...) umfasst, wobei die Modelle (PDF) mögliche Ergebnisse annähern, zum Beispiel entsprechend verschiedener Manöver in einer zweidimensionalen Ebene,

   - wobei der Modellsatz ausschließlich komplementäre (L, N, R; i, j) Modelle umfasst,

   wobei das Verfahren folgende Schritte umfasst

   - basierend auf mindestens einer ersten Messungsinstanz ((M($t_k$);(k)), Vorhersagen ($x_i^p$, $P_i^p$, $\mu_i^p$; $x_j^p$, $P_j^p$, $\mu_j^p$) des Ergebnisses (x, P) für mindestens zwei Modelle (L, N, R; i, j),
   - nach einer anschließenden Messungsinstanz (M($t_k$+$Tp$); (k+Tp)), Aktualisieren ($x_i^u$, $P_i^u$, $\mu_i^u$; $x_j^u$, $P_j^U$, $\mu_j^u$) der Modelle (L, N, R; i, j) für den entsprechenden Zeitpunkt, wodurch die Vorhersage, die auf der Grundlage der ersten Messungsinstanz getroffen wurde, angesichts der anschließenden Messungsinstanz aktualisiert wird,
   - Neuanordnen ($x_i^a$, $P_i^a$, $\mu_i^a$; $x_j^a$, $P_j^a$, $\mu_j^a$) von mindestens einem Modell (L, N, R; i, j) für die anschließende Messungsinstanz (($t_k$+$T_p$); (k+Tp)), wodurch ein aktualisiertes Modell ein anderes aktualisiertes Modell beeinflusst, wobei für ein gegebenes Paar von Modellen innerhalb des Modelsatzes (L, N, R; i, j) ein Modell mit einer höheren Wahrscheinlichkeit ($\mu$) ein Modell mit einer geringeren Wahrscheinlichkeit beeinflusst, **dadurch gekennzeichnet, dass**

   für den Schritt der Neuanordnung, für ein gegebenes Paar von Modellen innerhalb des Modelsatzes (L, N, R; i, j), ein Modell mit einer geringeren Wahrscheinlichkeit ($\mu$) niemals weder einen Zustandsvektor (x) noch eine Kovarianzmatrix (P) eines Models mit einer höheren Wahrscheinlichkeit beeinflusst,

der Schritt des Neuanordnens darüber hinaus beinhaltet, dass

$$\mu_1^a = \mu_1^u + \Delta\mu_{12},$$
$$\mu_2^a = \mu_2^u - \Delta\mu_{12}$$

wobei Index *a* die neuangeordneten Wahrscheinlichkeiten anzeigt und Index u die Wahrscheinlichkeiten anzeigt, welche bei der Modellaktualisierung durch eine Messung erhalten werden, wobei $\mu_2 > \mu_1$, und wobei

$$\Delta\mu_{12} = \kappa(\mu_2^u - \mu_1^u),$$

wobei $\kappa$ eine Diffusionskonstante ist, und wobei

der Einfluss auf die Modelldaten folgender ist

$$x_1^a = \left(\mu_1^u x_1^u + \Delta\mu_{12} x_2^u\right)/\mu_1^a$$
$$x_2^a = x_2^u$$

und

$$P_1^a = \left(\mu_1^u\left(\Delta x_{11}\Delta x_{11}' + P_1^u\right) + \Delta\mu_{12}\left(\Delta x_{12}\Delta x_{12}' + P_2^u\right)\right)/\mu_1^a$$
$$P_2^a = P_2^u$$

wobei

$$\Delta x_{11} = x_1^u - x_1^a$$
$$\Delta x_{12} = x_2^u - x_1^a$$

wobei sich Index 1 und Index 2 auf unterschiedliche Modelle beziehen, sich $\mu$ auf die Wahrscheinlichkeit für das gegebene Modell bezieht, sich x auf den Zustandsvektor bezieht und sich P auf eine Kovarianzmatrix bezieht, sich Index u auf das Aktualisieren bezieht und sich Index a auf das Neuanordnen bezieht.

3. Verfahren nach Anspruch 1 oder 2, bei welchem für jede Messungsaktualisierung mehrere Vorhersagen getroffen werden, wobei nur eine Neuanordnung erforderlich ist.

4. Verfahren nach einem der Ansprüche 1-3, wobei die Proportionalitätskonstanten, $\kappa_C$ und $\kappa_S$ in den Intervallen

$$\kappa_C \in (0,01;0,1), \tag{19}$$

wodurch $\kappa$ gleich $\kappa_C$ für den Fluss zwischen komplementären Modellen
und

$$\kappa_S \in (0,1;0,5), \tag{20}$$

wodurch $\kappa$ gleich $\kappa_S$ für den Fluss von komplementären Modellen zu Untersatz-Modellen

vorliegen.

5. Verfahren nach Anspruch 2, wobei für einen eindimensionalen Modelsatz die Proportionalitätskonstante folgende ist

$$\kappa = \left(\kappa_C\right)^{|i-j|} \tag{33}$$

wobei |i - j| eine natürliche Zahl ist, welche der Modelldistanz entspricht.

6. Verfahren nach Anspruch 1 oder 2, wobei der Schritt der Neuanordnung ein Einschritt-Verfahren ist.

7. Verfahren nach Anspruch 1, wobei, wenn die Messung innerhalb des Untersatz-Modells (S) fällt und die aktualisierte Wahrscheinlichkeit des Untersatz-Modells die höchste wird, die entsprechenden Modelle (C, S) in dem Schritt der Neuanordnung in Bezug auf Zustandsvektoren (x) und Kovarianzmatrizen (P) einander nicht beeinflussen.

8. Verfahren nach Anspruch 1, wobei, wenn die Messung außerhalb des Untersatz-Models (S) fällt und die aktualisierte Wahrscheinlichkeit des Untersatz-Models die geringste wird, nur das komplementäre Modell (C) das Untersatz (S)-Modell in dem Schritt der Neuanordnung in Bezug auf Zustandsvektoren (x) und Kovarianzmatrizen (P) beeinflusst.

9. Verfahren nach Anspruch 2, wobei, wenn die Messung innerhalb eines gegebenen Modells (L, N, R) fällt und die aktualisierte Wahrscheinlichkeit des Modells innerhalb der Messung die höchste wird, das Modell, in welches die Messung gefallen ist, die übrigen Modelle in dem Schritt der Neuanordnung beeinflusst.

10. Verfahren nach Anspruch 9, wobei Modelle mit höheren Wahrscheinlichkeiten Modelle mit geringeren Wahrscheinlichkeiten beeinflussen.

11. Verfahren nach Anspruch 2, wobei, wenn die Messung zwischen zwei gegebene Modelle (L, N, R) fällt, wodurch die aktualisierte Wahrscheinlichkeit der Modelle, zwischen welche die Messung gefallen ist, gleich wird, nur die bestimmten zwei Modelle, zwischen welche die Messungen gefallen sind, das/die übrige/n Modell oder Modelle im Schritt der Neuanordnung in Bezug auf Zustandsvektoren (x) und Kovarianzmatrizen (P) beeinflussen.

12. Verfahren nach einem der Ansprüche 1-11 verwendet für eine Radaranwendung (R), wobei mindestens die Position (Pos) eines Objektes in zweidimensionalen Koordinaten abgetastet oder abgeleitet wird und wobei einige der Wahrscheinlichkeitsmodelle der assoziierten bevorstehenden Position (Pos) in zweidimensionalen Koordinaten entsprechen.

## Revendications

1. Procédé pour effectuer une séquence de mesures (z, R ; M ; ($t_1$, $t_2$)) se rapportant à un vecteur d'état (Pos, Vel ; x, P) et effectuant de manière récursive des prédictions du vecteur d'état (Pos, Vel ; X, P),
le procédé de prédiction étant basé sur la définition d'un ensemble de modèles (PDF) comprenant au moins deux modèles alternatifs (PDF) ayant des valeurs moyennes différentes respectives ($x_i^p$, ...), des matrices de covariance respectives ($P_i^p$, . . .) et des probabilités respectives correspondantes ($\mu_i^p$, . . .), les modèles (PDF) approchant des résultats possibles, par exemple correspondant à des manoeuvres diverses dans un plan bidimensionnel,

- l'ensemble de modèles (PDF) comprenant au moins un modèle complémentaire (C) et au moins un modèle de sous-ensemble (S),

le procédé comprenant les étapes de

- sur la base d'au moins une première occurrence de mesure (M($t_k$) ; (k)), prédiction ($x_i^p$, $P_i^p$, $\mu_i^p$ ; $x_j^p$, $P_j^p$, $\mu_j^p$) du résultat pour au moins deux modèles (C, S ; i, j),
- après une occurrence de mesure suivante (M($t_k + T_p$) ; (k+Tp)), mise à jour ($x_i^u$, $P_i^u$, $\mu_i^u$ ; $x_j^u$, $P_j^u$, $\mu_j^u$) des modèles (C, S ; i, j) pour le point correspondant dans le temps, de sorte que la prédiction faite sur la base de la première occurrence de mesure est mise à jour à la lumière de l'occurrence de mesure suivante,
- réarrangement ($x_i^a$, $P_i^a$, $\mu_i^a$; $x_j^a$, $P_j^a$, $\mu_j^a$) d'au moins un modèle (C, S ; i, j) pour l'occurrence de mesure suivante

($t_k + T_p$) (k + Tp), de sorte qu'un modèle particulier mis à jour (C ; i) influence un autre modèle mis à jour (S ; j), **caractérisé en ce que** selon l'étape de réarrangement, le modèle de sous-ensemble (S ; i) n'influence jamais un vecteur d'état (x), ni une matrice de covariance (P) du modèle complémentaire (C ; j),

l'étape de réarrangement implique que

$$\mu_1{}^a = \mu_1{}^u + \Delta\mu^{12}$$
$$\mu_2{}^a = \mu_2{}^u - \Delta\mu^{12} \qquad\qquad (14)$$

où l'indice *a* indique les probabilités réarrangées et l'indice u indique les probabilités obtenues à la mise à jour de modèle par une mesure, où $\mu_2 > \mu_1$

et où

$$\Delta\mu_{12} = \kappa(\mu_2{}^u - \mu_1{}^u), \qquad\qquad (15)$$

où $\kappa$ est une constante de diffusion, et où l'influence sur les données de modèle est

$$x_1{}^a = (\mu_1{}^u x_1{}^u + \Delta\mu_{12} x_2{}^u)/\mu_1{}^a \qquad (16)$$
$$x_2{}^a = x_2{}^u$$

et

$$P_1{}^a = (\mu_1{}^u(\Delta x_{11}\Delta x'_{11} + P_1{}^u) + \Delta\mu_{12}(\Delta x_{12}\Delta x'_{12} + P_2{}^u))/\mu_1{}^a \qquad (17)$$
$$P_2{}^a = P_2{}^u$$

où

$$\Delta x_{11} = x_1{}^u - x_1{}^a$$
$$\Delta x_{12} = x_2{}^u - x_1{}^a \qquad\qquad (18)$$

où l'indice 1 se réfère au modèle de sous-ensemble et l'indice 2 se réfère au modèle complémentaire, $\mu$ se réfère à la probabilité pour le modèle donné et, x se réfère au vecteur d'état et P se réfère à une matrice de covariance, l'indice u se réfère à la mise à jour et l'indice a se réfère au réarrangement.

2. Procédé pour effectuer une séquence de mesures (z, R ; M ; ($t_1$ $t_2$)) se rapportant à un vecteur d'état (Pos ; Vel ; x, P) et effectuer de manière récursive des prédictions du vecteur d'état (Pos, Vel ; x, P), le procédé de prédiction étant basé sur la définition d'un ensemble de modèles (PDF) comprenant au moins deux modèles alternatifs (PDF) ayant des valeurs moyennes différentes respectives ($x_i{}^p$, ...), des matrices de covariance respectives ($P_i{}^p$, ...) et des probabilités respectives correspondantes ($\mu_i{}^p$, ...), les modèles (PDF) approchant des résultats possibles, par exemple correspondant à diverses manoeuvres dans un plan bidimensionnel,

- l'ensemble de modèles comprenant exclusivement des modèles complémentaires (L, N, R ; i, j),

le procédé comprenant les étapes de

- sur la base d'au moins une première occurrence de mesure (M ($t_k$) ; (k)), prédiction ($x_i{}^p$, $P_i{}^p$, $\mu_i{}^p$ ; $x_j{}^p$, $P_j{}^p$, $\mu_j{}^p$) du résultat (x, P) pour au moins deux modèles (L, N, R ; i, j),

- après une occurrence de mesure suivante (M ($t_k$ + $T_p$) ; (k+Tp)) mise à jour ($x_i^u$, $P_i^u$, $\mu_i^u$; $x_j^u$, $P_j^u$, $\mu_i^u$) des modèles (L, N, R ; i, j) pour le point correspondant dans le temps, de sorte que la prédiction faite sur la base de la première occurrence de mesure est mise à jour à la lumière de l'occurrence de mesure suivante,

- réarrangement ($x_i^a$, $P_i^a$, $\mu_i^a$, $x_j^a$, $P_j^a$, $\mu_j^a$) d'au moins un modèle (L, N, R ; i, j) pour l'occurrence de mesure suivante (($t_k$ + $T_p$) ; (k+Tp)), de sorte qu'un modèle particulier mis à jour influence un autre modèle mis à jour, dans lequel pour un couple donné de modèles à l'intérieur de l'ensemble de modèles (L, N, R ; i, j), un modèle ayant une probabilité supérieure ($\mu$) influence un modèle ayant une probabilité moindre, **caractérisé en ce que**

pour l'étape de réarrangement, pour un couple donné de modèles à l'intérieur de l'ensemble de modèles (L, N, R ; i, j), un modèle ayant une probabilité moindre ($\mu$) n'influence jamais un vecteur d'état (x), ni une matrice de covariance (P) d'un modèle ayant une probabilité supérieure, l'étape de réarrangement implique en outre que

$$\mu_1^a = \mu_1^u + \Delta\mu_{12}$$
$$\mu_2^a = \mu_2^u + \Delta\mu_{12}$$

où l'indice *a* indique les probabilités réarrangées et l'indice u indique les probabilités obtenues à la mise à jour de modèle par une mesure, où $\mu_2 > \mu_1$, et

où

$$\Delta\mu_{12} = \kappa(\mu_2^u - \mu_1^u),$$

où $\kappa$ est une constante de diffusion, et où l'influence sur les données de modèle est

$$x_1^a = (\mu_1^u x_1^u + \Delta\mu_{12} x_2^u) / \mu_1^a$$
$$x_2^a = x_2^u$$

et

$$P_1^a = (\mu_1^u [\Delta x_{11}\Delta x'_{11} + P_1 u) + \Delta\mu_{12}(\Delta x_{12}\Delta x'_{12} + P_2^u)) / \mu_1^a$$
$$P_2^a = P_2^u$$

où

$$\Delta x_{11} = x_1^u - x_1^a$$
$$\Delta x_{12} = x_2^u - x_1^a$$

où l'indice 1 et l'indice 2 se réfèrent à des modèles différents, $\mu$ se réfère à la probabilité pour le modèle donné, et x se réfère au vecteur d'état et P se réfère à une matrice de covariance, l'indice u se réfère à la mise à jour et l'indice a se réfère au réarrangement.

3. Procédé selon la revendication 1 ou 2, dans lequel des prédictions multiples sont faites pour chaque mise à jour de mesure, dans laquelle seulement un réarrangement est nécessaire.

4. Procédé selon l'une quelconque des revendications 1 à 3, dans lequel des constantes de proportionnalité, $\kappa_C$ et $\kappa_S$, sont dans les intervalles

$\kappa_C \in (0{,}01 \; ; 0{,}1)$ (19) de sorte que $\kappa$ égale $\kappa_C$ pour un flux entre des modèles complémentaires
et

$\kappa_S \in (0{,}1 \; ; 0{,}5)$ (20), de sorte que $\kappa$ égale $\kappa_S$ pour un flux de modèles complémentaires à des modèles de sous-ensemble.

5. Procédé selon la revendication 2, dans lequel pour un ensemble de modèles unidimensionnel, la constante de proportionnalité est

$$\kappa = (\kappa_C)^{|i-j|} \qquad (33)$$

où |i-j| est un nombre naturel, qui correspond à la distance de modèle.

6. Procédé selon la revendication 1 ou 2, dans lequel l'étape de réarrangement est une procédure à une seule étape.

7. Procédé selon la revendication 1, dans lequel, si la mesure tombe à l'intérieur du modèle de sous-ensemble (S), et que la probabilité mise à jour du modèle de sous-ensemble devient la plus haute, les modèles respectifs (C, S) ne s'influencent pas l'un l'autre sous l'étape de réarrangement en ce qui concerne des vecteurs d'état (x) et des matrices de covariance (P).

8. Procédé selon la revendication 1, dans lequel, si la mesure tombe à l'extérieur du modèle de sous-ensemble (S) et que la probabilité mise à jour du modèle de sous-ensemble devient la plus basse, seul le modèle complémentaire (C) influence le modèle de sous-ensemble (S) sous l'étape de réarrangement en ce qui concerne des vecteurs d'état (x) et des matrices de covariance (P).

9. Procédé selon la revendication 2, dans lequel, si la mesure tombe à l'intérieur d'un modèle donné (L, N, R) et que la probabilité mise à jour du modèle à l'intérieur de la mesure devient la plus haute, le modèle dans lequel la mesure est tombée influence les modèles restants sous l'étape de réarrangement.

10. Procédé selon la revendication 9, dans lequel des modèles de probabilités supérieures influencent des modèles de probabilités moindres.

11. Procédé selon la revendication 2, dans lequel, si la mesure tombe entre deux modèles donnés (L, N, R), de sorte que la probabilité mise à jour des modèles entre lesquels la mesure est tombée devient égale, seuls les deux modèles particuliers entre lesquels les mesures sont tombées influencent le modèle ou les modèles restants sous l'étape de réarrangement en ce qui concerne des vecteurs d'état (x) et des matrices de covariance (P).

12. Procédé selon l'une quelconque des revendications 1 à 11, étant utilisé pour une application de radar (R), de sorte qu'au moins la position (Pos) d'un objet est détectée ou obtenue dans des coordonnées bidimensionnelles et de sorte que certains des modèles de probabilité correspondent à la prochaine position associée (Pos) dans des coordonnées bidimensionnelles.

FIG. 5

FIG. 4

FIG. 1

M

M

Sp

Cp

Pos

Vel

Pos

Vel

R

R

EP 1 910 863 B1

FIG. 3

MODEL PREDICTION -
1-MANOUVRE MODEL

FIG. 6 - MANOUVRE

MODEL PREDICTION -
3-MANOUVRE MODEL

FIG. 8

FIG. 7 - NON-MANOUVRE

FIG. 10
GPBE1 MODEL

FIG. 9
MM MODEL

t2

L2 μ1

N2 μ2

R2 μ3

FIG. 13 - PREDICTION

N2' μ2'

R2' μ3'

L2'
μ1'

FIG. G

FIG. 15 - PREDICTION

FIG. 12 - UPDATE

t1

L1 μ1

N1 μ2

R1 μ3

t1

L1'
μ1'

N1' μ2'
R1' μ3'

FIG. 14 – RE-ARRANGE

FIG. 11 - PREDICT AND
MEASURE

t1

M

MODEL PREDICTION AND MEASUREMENT

MODEL UPDATE

M
Lv
Lp

Np
Nv

Rp
Rv

FIG. 16

Lpu
Lvu

Npu
Nvu

Rpu
Rvu

FIG. 17

M

Cp
Cv

FIG. 18

Cpu
Cvu

FIG. 19

M

Sp
Sv

FIG. 20

Spu
Svu

FIG. 21

k
k+Tp

k+Tp

EP 1 910 863 B1

MODEL PREDICTION AND
MEASUREMENT

MODEL UPDATE

MODEL RE-ARRANGEMENT

Sv
Sp
M
Cp
Cv

FIG. 22

Cpu
Cvu
Spu
Svu

FIG. 23

Cpa
Cva
Spa
Sva

FIG. 24 - IMM

Cpa
Cva
Spa
Sva

FIG. 25 - PMD

k          k+Tp

k+Tp

k+Tp

MODEL PREDICTION AND
MEASUREMENT

MODEL UPDATE

MODEL RE-ARRANGEMENT

FIG. 26

FIG. 27

FIG. 28 - IMM

FIG. 29 - PMD

k                    k+Tp

k+Tp

k+Tp

MODEL PREDICTION AND
MEASUREMENT

MODEL UPDATE

MODEL RE-ARRANGEMENT

FIG. 30

k                    k+Tp

FIG. 31

k+Tp

FIG. 32 - IMM

FIG. 33 - PMD

k+Tp

MODEL PREDICTION AND MEASUREMENT

MODEL UPDATE

MODEL RE-ARRANGEMENT

FIG. 34

FIG. 35

FIG. 36 - IMM

FIG. 37 - PMD

k

k+Tp

k+Tp

k+Tp

EP 1 910 863 B1

FIG. 38
- STATE VECTOR

39

| Measure-ment | Update | Interaction | Prediction | No Measurement No update ⇒ Full interaction is needed | Prediction |

$z, R$

$x_i^u = x_i^p$  $\qquad x_i^I \neq x_i^u$

$P_i^u = P_i^p$  $\qquad P_i^I \neq P_i^u$

$\mu_i^u = \mu_i^p$  $\qquad \mu_i^I \neq \mu_i^u$

$\mu_1$

$\mu_2$

Probability update

Probability prediction

$m_{11}$
$m_{21}$
$m_{12}$
$m_{22}$

Probability prediction

$\mu_1$

$\mu_2$

$x_1, P_1$

Exp. meas. Gating

State & cov. update

State & cov. interaction

State & cov. pred.

Exp. meas. Gating

State & cov. interaction

State & cov. pred.

$x_1, P_1$

$x_2, P_2$

Exp. meas. Gating

State & cov. update

State & cov. pred.

Exp. meas. Gating

$x_2, P$

Updated total estimate $\quad x, P$

Predicted total estimate $\quad x, P$

Predicted total estimate $\quad x, P$

k

k+Tp

k+2Tp

Time of measurement

FIG. 39 - IMM

Time of missed measurement

Time of measurement

Measure-
ment

Update

Adaptation

Prediction

No Measurement
No update ⟹ No Adaptation

Prediction

$z, R$

*) given:
$\mu_1 > \mu_2$

$x_i^u = x_i^p$     $x_i^a = x_i^u$

$P_i^u = P_i^p$     $P_i^a = P_i^u$

$\mu_i^u = \mu_i^p$     $\mu_i^a = \mu_i^u$

$\mu_1$

$\mu_2$

Proba-
bility
update

Prob. mass

*)

diffusion

Probability

$m_{11}$
$m_{21}$
$m_{12}$
$m_{22}$

prediction

Probability

$m_{11}$
$m_{21}$
$m_{12}$
$m_{22}$

prediction

$\mu_1$

$\mu_2$

$x_1, P_1$

$x_2, P_2$

Exp. meas.
Gating

Exp. meas.
Gating

State
& cov.
update

State
& cov.
update

*)
State & cov.

adaptation

State
& cov.
pred.

State
& cov.
pred.

Exp. meas.
Gating

Exp. meas.
Gating

State
& cov.
pred.

State
& cov.
pred.

$x_1, P_1$

$x_2, P$

Updated
total
estimate

$x, P$

Predicted
total
estimate

$x, P$

Predicted
total
estimate

$x, P$

k

k+Tp

k+2Tp

Time of
measurement

FIG. 40 - PMD

Time of missed
measurement

Time of
measurement

40

FIG. 41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020113729 A

**Non-patent literature cited in the description**

- **T. R. KRONHAMN.** Angle only tracking of maneuvering targets using adaptive-IMM multiple range models. *RADAR,* 15 October 2002, ISBN 0-85296-750-0, 310-314
- Beyond the Kalman Filter. **B. RISTIC ; S. ARULAMPALAM ; N. GORDON.** Particle Filters for Tracking Applications. Artech House, 2004
- **Y. BAR-SHALOM ; X. R. LI ; T. KIRUBARAJAN.** Estimation with Applications to Tracking and Navigation. John Wiley & Sons, 2001
- **S. BLACKMAN ; R. POPOLI.** Design and Analysis of Modern Tracking Systems. Artech House, 1999
- **A. P. BLOM.** An Efficient Filter for Abruptly Changing Systems. *Proc. 23rd IEEE Conf. Decision and Control,* December 1984